# EUROPEAN PATENT SPECIFICATION

(11) **EP 1 709 341 B1**
(45) Date of publication and mention of the grant of the patent: **13.10.2010**
(21) Application number: 03819236.5
(22) Date of filing: 30.12.2003
(51) Int. Cl.: F16D 55/225, F16D 65/097

(54) **BRAKE PAD, SPRING AND CALIPER BODY FOR A DISC BRAKE**
BREMSBELAG, FEDERELEMENT UND BREMSSATTEL FÜR EINE SCHEIBENBREMSE
GARNITURE DE FREIN, RESSORT ET ETRIER DE FREIN POUR UN FREIN A DISQUE

(43) Date of publication of application: 11.10.2006
(73) Proprietor: Freni Brembo S.p.A., 24035 Curno (Bergamo) (IT)
(72) Inventor: SCHORN, Michael, I-20050 Camparada, (MONZA E BRIANZA) (IT); TIRONI, Giovanni, Mario, I-24044 Dalmine, (BERGAMO) (IT); ONGARETTI, Enrico, Battista, I-24064 Grumello del Monte (BERGAMO) (IT); SALA, Paolo, I-24030 Villa D'Adda, (BERGAMO) (IT)
(74) Representative: Leihkauf, Steffen Falk
(86) International application number: PCT/IT2003/000871
(87) International publication number: WO 2005/064191

(56) References cited:
- US-A- 4 245 723
- US-A- 4 723 635
- US-A- 4 940 119
- US-B1- 6 386 335
- US-B1- 6 527 090
- PATENT ABSTRACTS OF JAPAN vol. 0020, no. 63 (M-019), 13 May 1978 (1978-05-13) & JP 53 024964 A (AISIN SEIKI CO LTD), 8 March 1978 (1978-03-08)

## Description

This invention relates to a pad and calliper body for a disc brake. An example of a known brake pad is disclosed e.g. in US-A-4940119.

Pads of the known art are generally subjected to annoying vibrations, chattering and noise which occur in particular during the stage in which the pad comes into contact with the disc and light braking.

The problem underlying this invention is that of providing a pad for a disc brake which has structural and functional characteristics such as to overcome the aforesaid disadvantages relating to the known art.

This problem is resolved through a pad according to claim 1.

Other advantages and characteristics of the present invention will become clear from the following detailed description which is given with reference to the appended drawings which are provided purely by way of non-limiting example and in which:

Figure 1 shows a perspective view of a calliper body for a disc brake according to this invention,

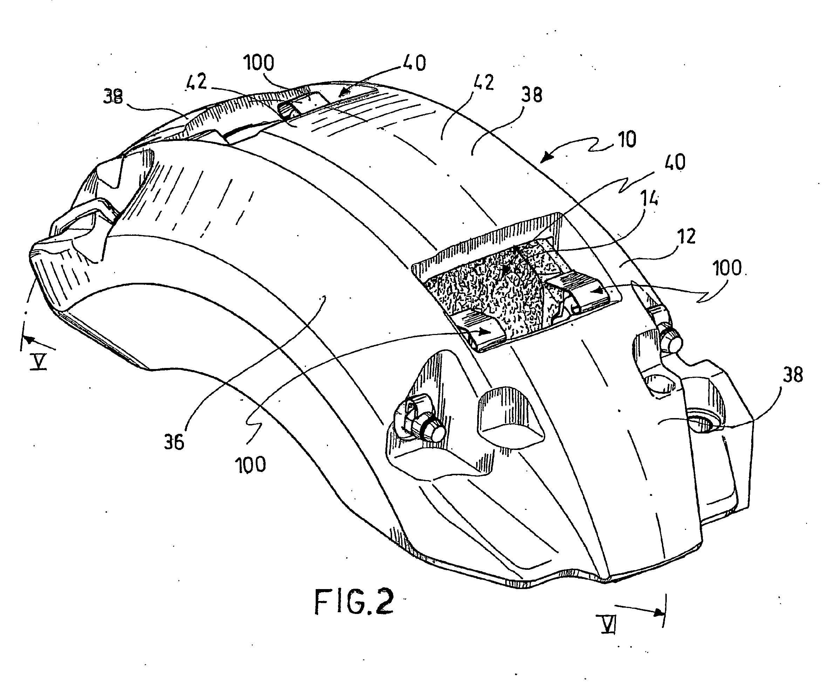

Figure 2 illustrates a perspective view of a calliper for a disc brake according to this invention,

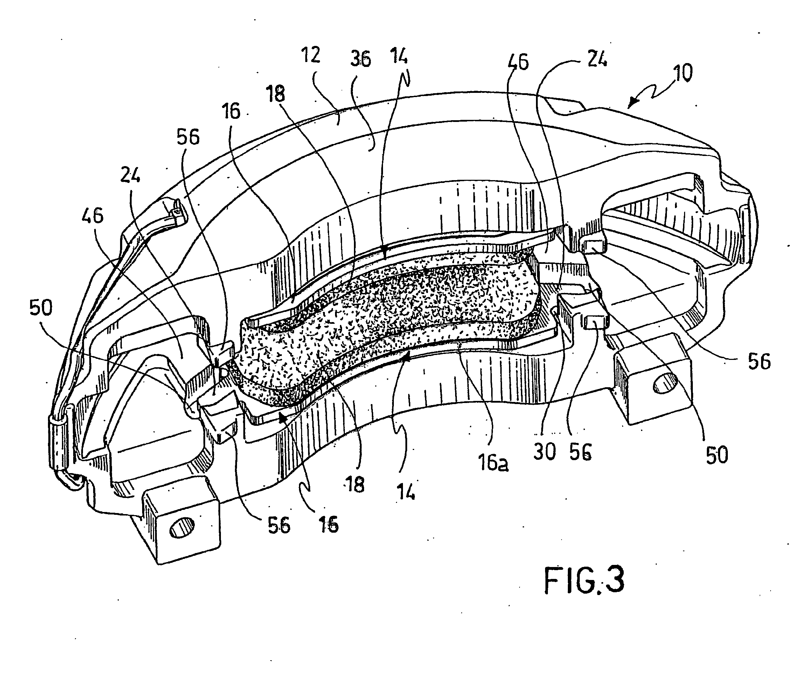

Figure 3 illustrates a perspective view of thebody in Figure 2 from a different angle and fitted with pads,

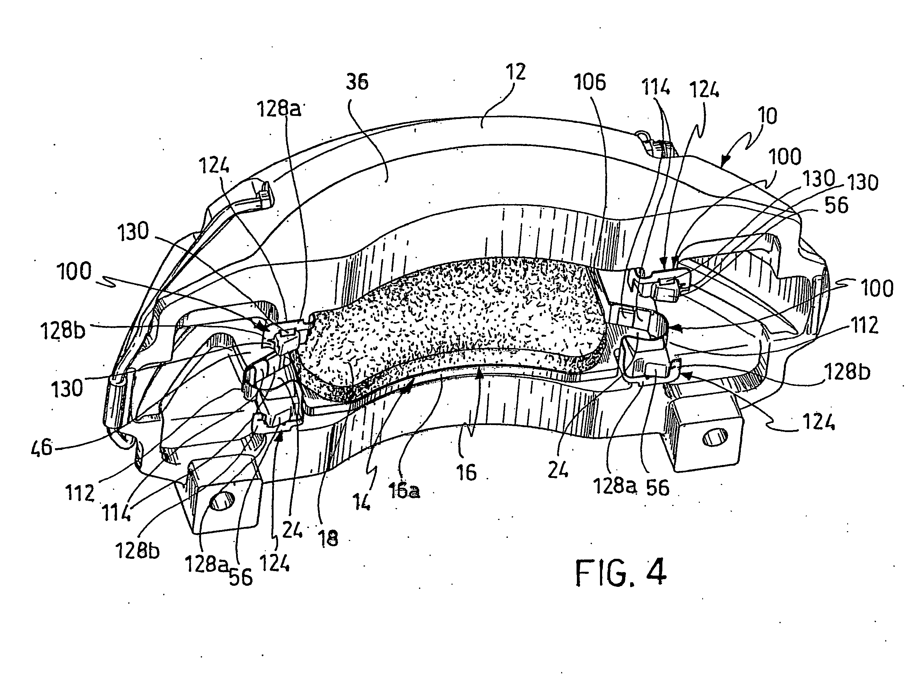

Figure 4 illustrates a perspective view of the calliper in Figure 2 from a different angle,

Figure 5 illustrates the body in Figure 2 with a fitted pad in a cross-sectional view along a plane indicated by the line V-V on the body in Figure 2,

Figure 6 illustrates the calliper in Figure 5 with two springs and one pad,

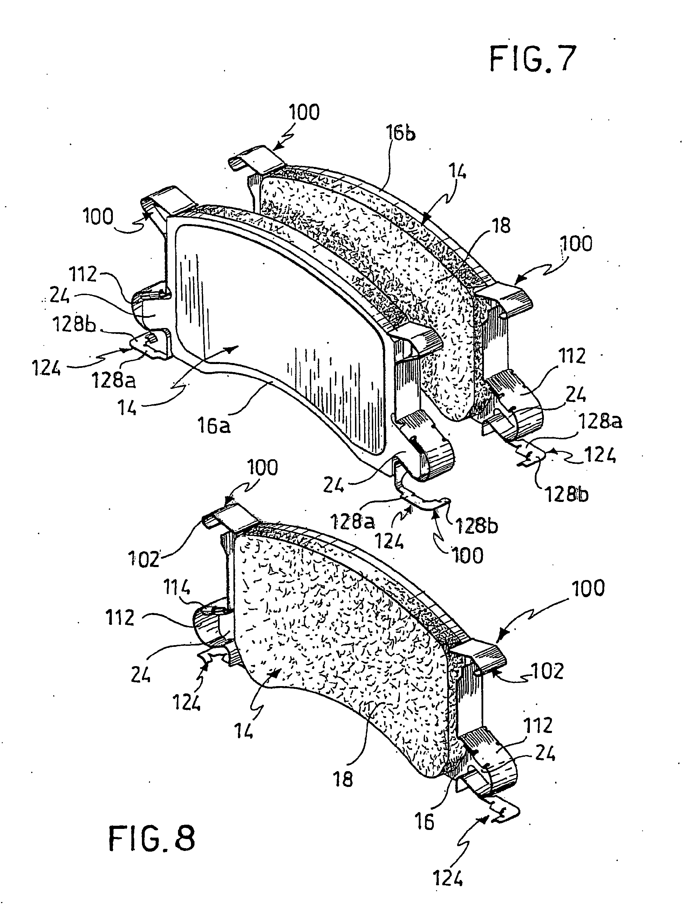

Figure 7 illustrates a perspective view of two pads facing each other with corresponding springs according to this invention,

Figure 8 illustrates a perspective view of one of the two pads in Figure 7 with corresponding springs according to this invention,

Figure 9 illustrates a perspective view of two pads facing each other according to this invention,

Figure 10 illustrates a perspective view of one of the two pads in Figure 9 according to this invention,

Figures 11-14 illustrate perspective views from different angles of a spring according to the invention,

Figure 15 illustrates a perspective view of an enlarged detail of a calliper for a disc brake according to this invention,

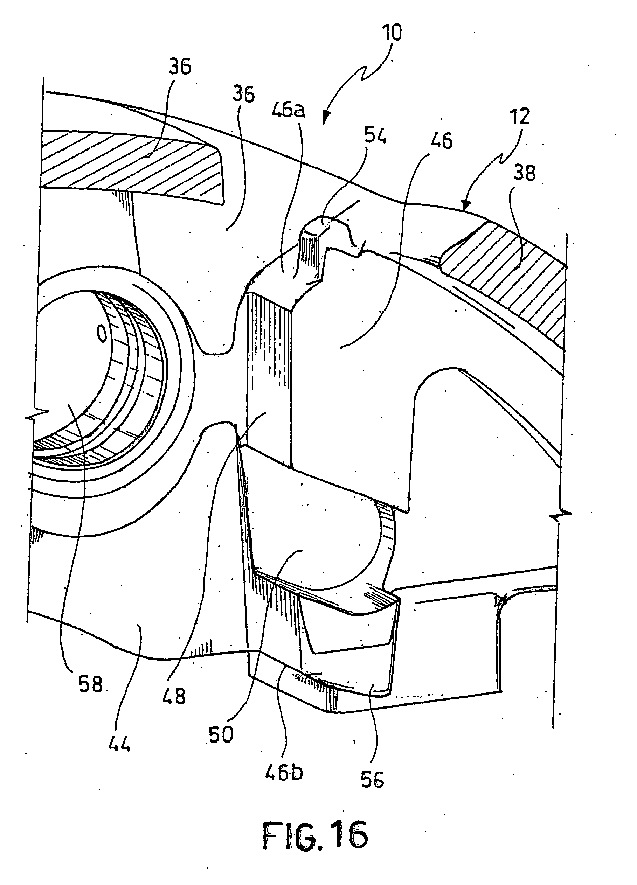

Figure 16 illustrates a perspective view of an enlarged detail of a body of a calliper for a disc brake according to this invention,

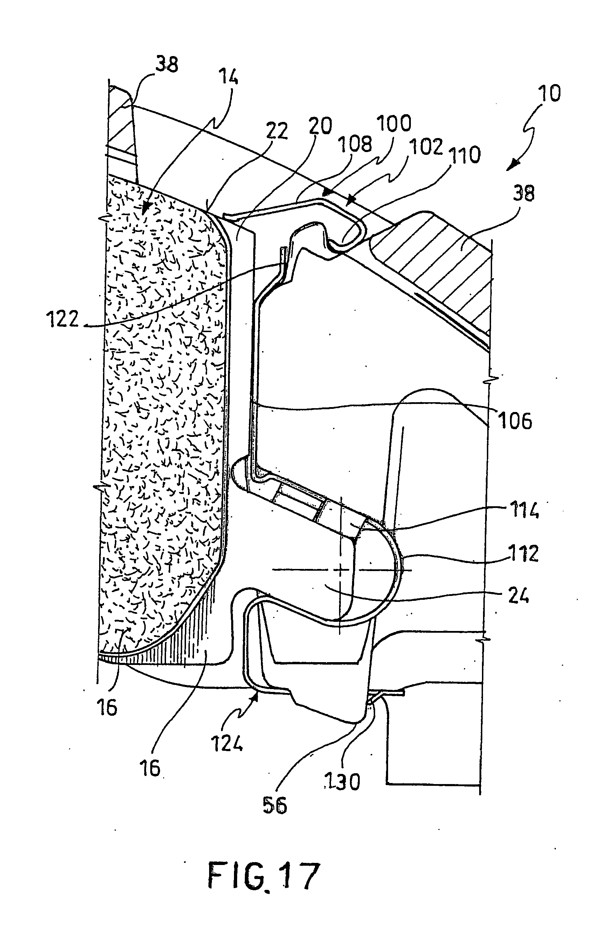

Figure 17 illustrates an enlarged detail of the cross-section in Figure 6,

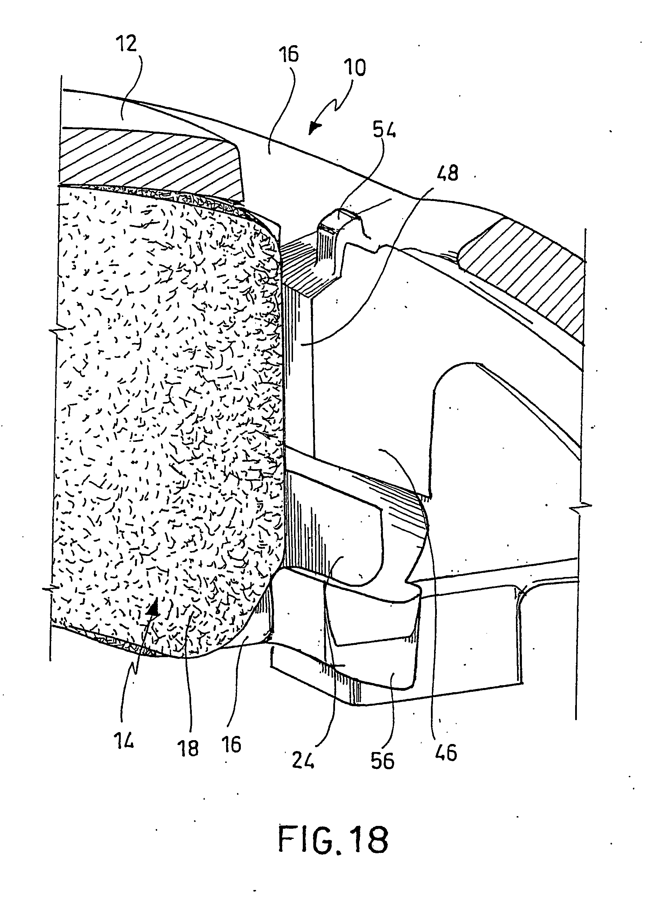

Figure 18 illustrates a perspective view of an enlarged detail of a body of a calliper for a disc brake with a pad fitted, according to this invention,

Figure 19 illustrates a perspective view of an enlarged detail of a body of calliper for a disc brake with a spring fitted, according to this invention.

With reference to the abovementioned figures, 10 indicates a calliper of a disc brake as a whole. Conventionally a disc brake comprises a disc, not shown, mounted on the hub of the wheel of a vehicle and a calliper mounted on a non-rotating portion of the vehicle, for example a suspension, so as to straddle the disc when the disc brake is assembled on the vehicle.

Conventionally the disc and the vehicle wheel define an axis of rotation, not shown. The definitions of the radial direction r and the circumferential or tangential direction t used below with reference to the assembled condition of the disc brake relate to the axis of rotation of the disc. Also, considering a radial vector r which has its origin at the axis of rotation of the disc and moves away from the axis of rotation of the disc, a portion of the brake is inner with respect to a reference if it is closer to the axis of rotation of the disc than the reference, and outer if it is further away from the axis of the rotation of the disc and the reference.

Calliper 10 comprises a body 12 which can be mounted on the vehicle in a fixed way, as in the situation illustrated in the figures, or in a floating way as is conventionally known in the art. This invention may apply to both of the circumstances indicated above.

Body 12 is suitable for receiving at least two pads 14 which are arranged facing each other and at a specific distance from each other in such a way that in the disc brake assembly the disc lies between the two pads and therefore the two pads face each other against opposite braking surfaces of the disc.

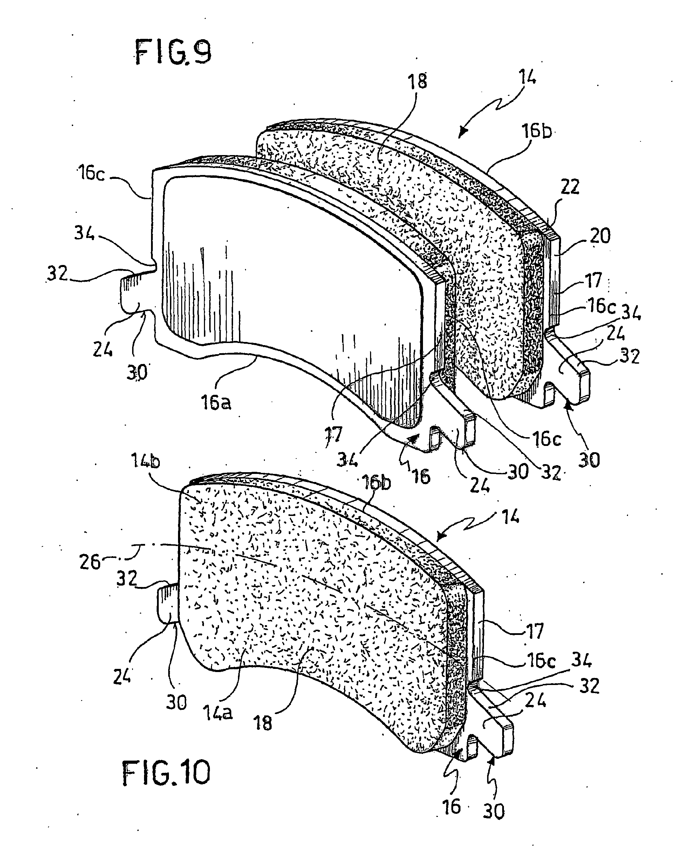

A pad 14 comprises a supporting plate 16 to which a layer of friction material 18 is applied. Figures 9 and 10 illustrate an embodiment of a pad according to this invention. With reference to the assembled configuration of the calliper and the disc brake, the supporting plate has an inner edge 16a, an outer edge 16b and two opposite sides 16c. With reference to supporting plate 16 which is mounted on the body of the calliper, inner edge 16a is substantially represented by the concave edge, outer edge 16b is substantially represented by the convex edge and opposite sides 16c connect the inner edge and the outer edge. The convex edge and the concave edge are preferably arcuate according to a portion of circumference which is substantially coaxial with the disc.

The characteristics of the pad will be described below with reference to the axis of rotation of the disc and therefore a radial direction r and a tangential direction t as defined above. The radial direction r and the tangential direction t also refer to the pad when not mounted on the body of the calliper, the radial direction r being regarded as being a line passing through a median point of inner edge 16a and outer edge 16b, or the arcuate edges of the pad, and the tangential direction t is regarded as being a portion of the circumference passing through the centre of gravity of the pad and substantially concentric with inner edge 16a and outer edge 16b of the pad.

Advantageously supporting plate 16 has an extension in the tangential direction t which is greater than the tangential extension of the corresponding layer of friction material 18. In other words plate 16 has extensions 20 which extend on both sides of the friction material in a tangential direction. Again in other words, inner edge 16a and outer edge 16b of supporting plate 16 are larger than the corresponding edges of friction material 18.

Each of the two extensions defines a bearing surface 22 for a spring or resilient member as will be described below. This bearing surface 22 faces the outside of the body of the calliper when the pad is mounted thereon. In other words, bearing surface 22 comprises an end portion of the supporting plate defining outer edge 16b.

According to a possible embodiment, extensions 20 extend over the full height of the plate or all its extension in a substantially radial direction r or, again in other words, the extension of its opposite sides 16c.

Supporting plate 16 comprises two wings 24 which extend in a substantially tangential direction t. Each of the wings extends from one of the opposite sides 16c of supporting plate 16 away from friction material 18, from extensions 20 if provided.

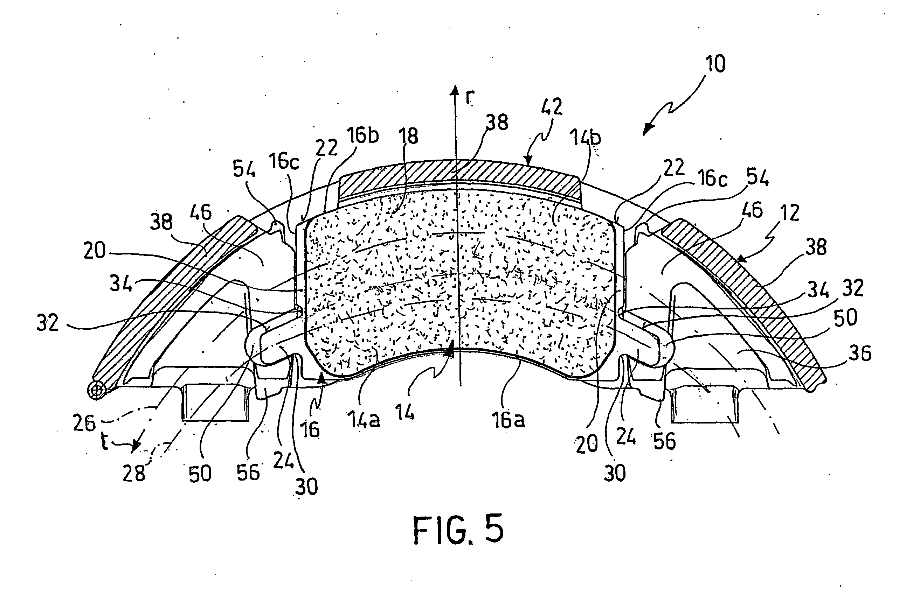

26 indicates a baricentric circumference of the pad, that is a circumference defined as above with reference to the reference system relating to the pad or defined as the circumference having its centre on the axis of rotation of the disc and passing approximately through the centre of gravity of pad 14. The baricentric circumference theoretically divides the pad into a first portion 14a, or inner portion, located on the side of the axis of rotation of the disc with respect to baricentric circumference 26, and a second portion 14b, or outer portion, located on the side opposite the axis of rotation of the disc with respect to the baricentric circumference 26 (as illustrated by way of example in Figure 5).

Wings 24 extend away from friction material 18 from first portion 14a, that is from the portion closest to the axis of rotation of the disc with respect to baricentric circumference 26. With reference to a reference system relating to the pad alone, wings 24 extend away from friction material 18 from first portion 14a, that is from the portion of the pad comprising inner edge 16a.

According to a possible embodiment, wings 24 are inclined with respect to sides 16c of supporting plate 16 and preferably in such a way as to lie along a circumference 28 which has its centre on the axis of rotation of the disc and passes through a median line of wings 24. In other words, with reference to the pad when not assembled to the body of the calliper, wings 24 are inclined with respect to the opposite sides 16c of the supporting plate and preferably in such a way as to lie along a circumference 28 which is closer to inner concave edge 16a than baricentric circumference 26.

30 and 32 indicate two bearing surfaces of wings 24, which are inner and outer respectively with respect to a radial direction r directed away from the axis of rotation of the disc.

According to a possible embodiment, between wings 24 and supporting plate 16, and in particular extensions 20, there is provided at least one discharge groove 34. In the situation where the wings are inclined, discharge groove 34 is preferably made at an obtuse angle between outer bearing surface 32 and the sides 16c of supporting plate 16.

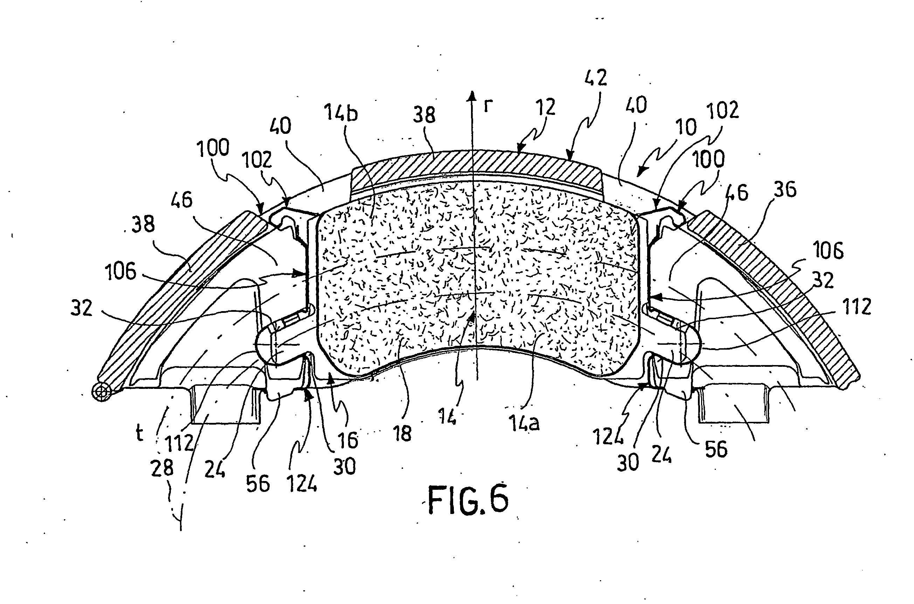

Body 12 may be constructed as a single body or as assembled parts. According to a possible embodiment, body 12 has a configuration such as to substantially provide two side walls 36 located on opposite sides of the disc joined by connecting members 38 which extend substantially transversely to the disc and walls 36. According to a possible embodiment illustrated for example in the figures (in particular Figures 5 and 6), connecting members 38 comprise arcuate walls along a circumference coaxial with the disc spaced apart by opening 40. The radial extension of connecting members 38 is preferably small in comparison with the tangential or angular extension of the same.

Considering the definition of the radial and tangential directions indicated above, and also with reference to body 12, it is possible to identify inner or outer portions. By outer portions are meant portions which are designed to be located further from the axis of rotation of the disc than a median line passing tangentially through the body, for example with respect to the baricentric circumference defined above for the pads. Similarly by inner portions are meant portions which are designed to be located closer to the axis of rotation of the disc than a median line passing tangentially through the body, for example with respect to the baricentric circumference defined above for the pads.

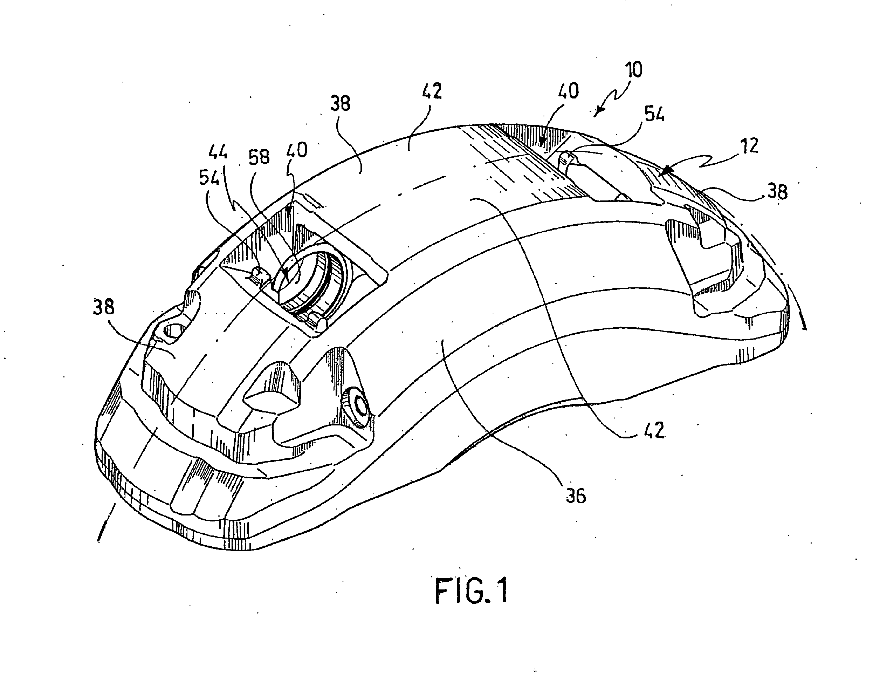

Body 12 comprises two portions 42 or halves located on opposite sides of the disc and bounded for example by the line of the plane indicated by V-V in Figure 1. The two portions 42 may be merely theoretical, where the body is constructed as a single piece, or may correspond to two separate components of the calliper body. For example Figure 5 illustrates one of such portions of a body constructed as a single part and cross-sectioned along the plane of the line V-V in Figure 1, that is along a plane parallel to the disc (or perpendicular to the axis of rotation of the disc) and which is a median plane with respect to the body of the calliper.

With reference to the appended figures, each portion of body 12 has at least one seat 44 to house at least one pad. In the situation illustrated in the figures one pad and one housing seat are provided for each portion of the body. Obviously several seats or several pads may be provided for each portion of the calliper body, for example two seats for two separate pads.

With reference for example to Figure 5 or 6, housing seat 44 is bounded externally by a connecting member 38 and laterally by containment walls 46 which extend substantially in a perpendicular direction from side walls 36 of the calliper body towards the disc in the assembled configuration of the disc brake. 48 indicates contact surfaces of containment walls 46 which lie opposite lateral surfaces 17 of supporting plate 16.

According to a possible embodiment, a containment wall 46 has a housing 50 to receive a corresponding wing 24. Advantageously housings 50 have a shape which matches corresponding wing 24 in such a way that it can be received within them. Preferably housing 50 has larger dimensions than the corresponding dimensions of the corresponding wing. In particular housing 50 has dimensions in a substantially radial direction which are greater than the corresponding dimensions of the corresponding wing.

According to a possible embodiment each containment wall 46 has an outer surface 46a with reference to radial direction r, that is a surface which is substantially perpendicular to side walls 36 of the body and located in an outer portion of the body with reference to the radial direction and the axis of rotation of the disc as previously defined.

Outer surface 46a is an extension of contact surface 48 and is preferably inclined with respect thereto towards the outside of the calliper body, away from housing seat 44 in both a radial direction and a tangential direction.

According to a possible embodiment, each containment wall 46 has an inner surface 46b, that is a surface substantially perpendicular to side walls 36 of the body and located in an inner portion of the body with reference to the radial direction and the axis of rotation of the disc as defined above.

Inner surface 46b is preferably located in a direction substantially perpendicular to contact wall 48.

According to a possible embodiment, body 12 comprises securing members for resilient members or springs located between body 12 and pad 14 as will be described below.

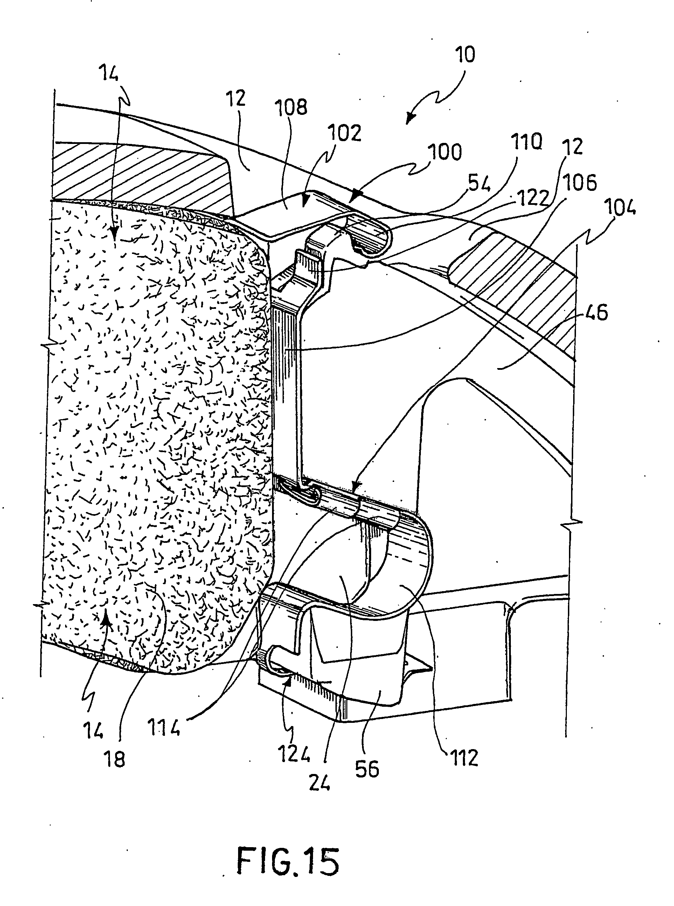

With reference to a portion 42 of body 12, illustrated for example in Figure 15, the securing members are preferably shaped in such a way as to prevent the springs from moving in a direction parallel to the axis of rotation of the disc, in particular towards the other pad or towards the disc itself. In other words the securing members are advantageously shaped in such a way as to immobilise the springs between the side wall 36 of portion 42 of the calliper body and the securing members themselves. In addition to this the calliper body is configured in such a way as to immobilise the springs in radial direction r too, that is it is provided that outer surface 46a and inner surface 46b define contact surfaces for the springs in such a way as to secure them radially both away from and close to the axis of rotation of the disc. Furthermore, depending upon the conformation of the springs, the securing members are suitable for preventing movement by the springs in a circumferential or tangential direction.

As will be described below, the securing members are structured in such a way as to immobilise the two extremities of the resilient members corresponding to an inner portion and an outer portion respectively of the calliper body.

Advantageously the securing members comprise an outer tooth 54 which extends from the body in an outer portion with respect thereto and extends along the radial vector r as defined above. Outer tooth 54 is located at a specific distance from side wall 36. Preferably outer tooth 54 extends from a containment wall 46 of housing seat 44 defining a seat to receive a portion of the spring between side wall 36 and the outer tooth. In the embodiment illustrated in the figures outer tooth 54 extends from outer surface 46a of containment surface 46 defining the seat to house the spring between side wall 36, outer surface 46a and outer tooth 54.

According to a possible embodiment, two outer teeth 54 are provided on opposite sides of pad 14, preferably corresponding to containment walls 46 which bound seat 44 housing the pad.

According to a possible embodiment, with reference to one of the portions of the calliper body, the securing members comprise an inner tooth 56 which extends from the body, in an inner portion thereof, and which extends in a direction opposite to the direction of radial vector r as defined above. Inner tooth 56 is located at a specific distance from side wall 36. Preferably inner tooth 56 extends from a containment wall 46 of housing seat 44 defining a seat to receive a portion of a spring between side wall 36 and the inner tooth itself. In the embodiment illustrated in the figures, inner tooth 56 extends from inner surface 46b of containment surface 46 defining the seat for housing the spring between side wall 36, inner surface 46b and inner tooth 56.

According to a possible embodiment two inner teeth 56 are provided from opposite sides of pad 14, preferably corresponding to containment walls 46 which bound seat 44 housing the pad.

Body 12 is also suitable for receiving means to press the pad against the disc during the action of braking the vehicle. These means are not illustrated in detail but may comprise for example pistons which are activated hydraulically or by means of electric motors. Figure 1 shows a perspective view of body 12 of the calliper from an angle which shows an opening 58 for housing one of the pistons, not shown, which is suitable for interacting with the corresponding pad, which is also not shown in Figure 1.

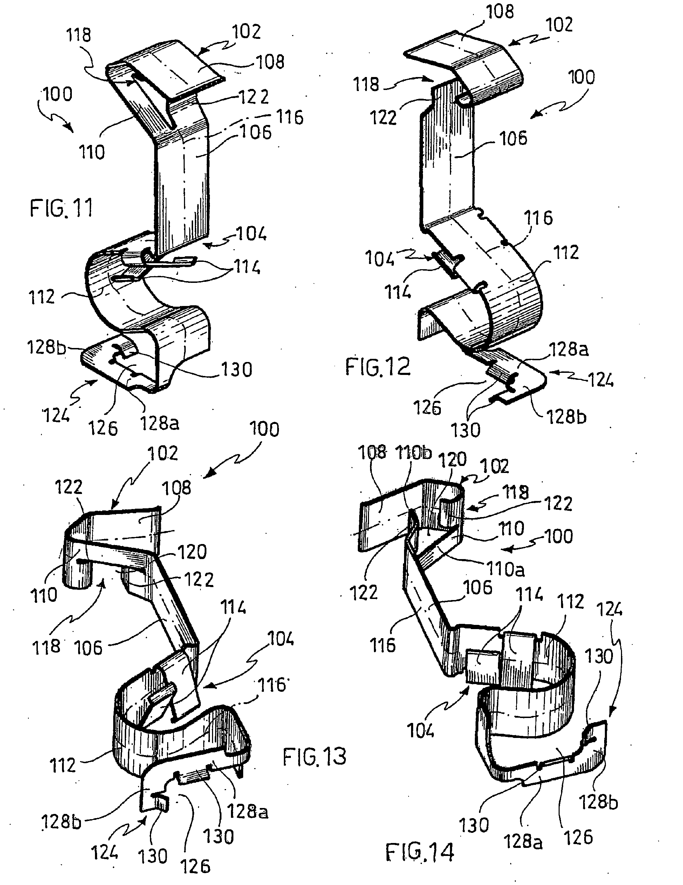

A resilient member 100 or spring according to this invention which can be mounted on a calliper body for example as previously described between a side 16c of supporting plate 16 and the body itself is illustrated with particular reference to Figures 11-14.

According to a possible embodiment, spring 100 comprises a cut and bent strip which can be located between pad 14 and body 12 of the calliper to hold the pad compressed between two elastic members 100 and against the walls of body 12 of the calliper.

In particular spring 100 comprises at least two thrust portions suitable for interacting with supporting plate 16 for pad 14 transmitting a force thereto with components directed towards the axis of rotation of the disc and towards the opposite spring acting on the pad.

A first thrust portion 102 preferably corresponds to one extremity of the spring and in particular the outer extremity of the spring with reference to the spring assembled on the calliper body, and is suitable for acting on an outer bearing surface of the pad, for example bearing surface 22 of extensions 20. A second thrust portion 104 preferably corresponds to a central portion of the spring and is suitable for acting on outer bearing surface 32 of a wing 24 of supporting plate 16.

According to a possible embodiment a spring or resilient member 100 comprises a base portion 106 which can be located between one side 16c of the supporting plate and the corresponding containment wall 46 of seat 44 housing the pad.

According to a possible embodiment first thrust portion 102 and second thrust portion 104 obtained by bending the strip forming resilient member 100 diverge from opposite sides of base portion 106, preferably without any break in continuity.

Considering spring 100 assembled on the calliper body, first thrust portion 102 comprises an inclined wall 108 which is suitable for bearing on bearing surface 22 of supporting plate 16 and is connected to base portion 106 through a bent connecting portion 110 and which extends away from base portion 106 and the pad in a radial (outward) and tangential direction. According to a possible embodiment base portion 106, connecting portion 110 and inclined wall 108 define a hook-shaped length which bears on the plate from above, in particular on bearing surface 22, exerting thereupon a force with components towards the axis of rotation of the disc and towards the other spring acting on the same pad. In other words, connecting portion 110 is able to displace the point from which inclined wall 108 extends from connecting portion 110 to a more outer zone, radially and tangentially further from the pad with respect to base portion 106 in such a way as to form a resilient length which presses the pad inwards against the calliper body and tangentially between the two springs acting on the pad.

According to a possible embodiment, first thrust portion 102 has a "c"-shaped length which extends substantially from one side of base portion 106, preferably from a flat length of the base portion. The free extremity of first thrust portion 102, that is the extremity suitable for interacting with supporting plate 16, is located opposite the remaining first thrust portion with respect to base portion 106.

Second thrust portion 104 extends from base portion 106 on the opposite side with respect to first thrust portion 102. According to a possible embodiment the second thrust portion corresponds to a central portion of spring 100 and is suitable for acting on a central length of side 16c of supporting plate 16. Base portion 106 comprises a loop 112 which is suitable for enclosing a corresponding wing 24. In this case second thrust portion 104 is advantageously constructed from the length of the spring defining loop 112. Advantageously second thrust portion 104 is suitable for exerting a force on bearing surface 32 of corresponding wing 24.

According to a possible embodiment, loop 112 of spring 100 has in the portion facing wing 24 at least one tang 114 which extends in a direction transverse to a line of curvilinear shape 116 defining the overall line of the spring. Preferably two tangs which extend from opposite sides of line 116 are provided and even more preferably they are offset along this overall line. The two tangs 114 are suitable for being bent through approximately 180° as illustrated in the appended figures. With reference to the assembled disc brake the two tangs are bent through approximately 180°C towards the axis of rotation of the disc so as to bear and be compressed against supporting wall 32 of corresponding wing 24 pressing it inwards against containment wall 46 within housing 50. In other words tangs 114 are bent through approximately 180° with respect to base portion 106 towards the concave part of loop 112.

Loop 112 envelops corresponding wing 24 in such a way as to be inserted between bearing surface 30 and containment wall 46 in such a way that tangs 114 press wing 24 against the inner portion of loop 112.

According to a possible embodiment spring 100 comprises portions which hook on to the calliper body, preferably suitable for acting together with the members securing the calliper body as described above.

According to a possible embodiment, a first hooking portion 118 is formed from a length of first thrust portion 102 and in particular connecting portion 110. In other words connecting portion 110 can be inserted between outer tooth 54 and side wall 36 immobilising spring 100 in a direction parallel to the axis of rotation of the disc. Again in other words, connecting portion 110 lies parallel to outer surface 46a of containment wall 46 between side wall 36 and outer tooth 54. According to a possible embodiment, first hooking portion 118 is shaped in such a way as to envelop outer tooth 54 on three sides immobilising movement of the outer extremity of spring 100 in a tangential direction with respect to the calliper body. Preferably connecting portion 110 has dimensions similar to those of base portion 106 and inclined wall 108 in a direction parallel to the axis of rotation of the disc, that is transverse to the overall line 116 of the spring, and is cut in such a way as to form an opening 120 to house outer tooth 54. Even more preferably connecting portion 110 also comprises bent lengths 122 which at least partly bound opening 120 and can be located on the sides of outer tooth 54, preferably on the two opposite sides of outer tooth 54.

According to a possible embodiment, opening 120 has an extension which is smaller than the width of connecting portion 110 in a direction transverse to overall line 116 and is open on one side of connecting portion 110, for example that opposite the disc in the assembled configuration of the calliper.

In other words connecting portion 110 has a first line of cut 110a which extends parallel to an overall line 116 of the shape of spring 100 over a length such as to affect the extension of outer tooth 54. In this way connecting portion 110 is divided into two lengths, preferably of equal width, of which that which is intended to be located closer to the disc has a further line of cut 110b perpendicular to line of cut 110a and overall line 116 which affects the full width of that length. The other line of cut 100b is located approximately in a median position with respect to first line of cut 110a with the result that line of cut 110a and the other line of cut 110b define a "T"-shaped cut in connecting portion 110 which bounds bent lengths 122.

According to a possible embodiment, a second hooking portion 124 is defined by a portion of the inner extremity of spring 100 which extends from base portion 106 and in particular from loop 112, if present. In other words second hooking portion 124 is suitable for being inserted between inner tooth 56 and side wall 36 of the calliper body immobilising the inner extremity of spring 100 in a direction parallel to the axis of rotation of the disc. According to a possible embodiment, second hooking portion 124 extends with continuity from base portion 106 or loop 112, if present, bending substantially into an "L"-shape to lie parallel to the inner surface 46b of containment wall 46. According to a possible embodiment, second hooking portion 124 has smaller dimensions that that of base portion 106 in a direction parallel to the axis of rotation of the disc, that is transverse to the overall line 116 of the spring, being cut in such a way as to form an opening 126 to house inner tooth 56 immobilising movements of the inner extremity of spring 100 in a tangential direction. Preferably second hooking portion 124 is cut in an "L" shape with a first limb 128a of the "L" being suitable for being located between inner tooth 56 and side wall 36 of the calliper body, and a second limb 128b of the "L" being suitable for enveloping one side of inner tooth 56. In other words the first limb of the "L" is parallel to overall line 116 while the second limb of the "L" is transverse to the overall line 116 of the spring.

Second hooking portion 124 also comprises bent lengths 130 which at least partly bound opening 126 corresponding to inner tooth 56. Bent sections 130 are suitable for being located on the sides of inner tooth 56. Preferably two bent lengths 130 suitable for being located on the two adjacent sides of inner tooth 56 are provided.

With reference to Figures 6 and 11-14, spring 100 extends predominantly along overall line 116. Considering as a reference the flat length of base portion 106, the outer hook-shaped portion and loop 112 extend from the same side while the free extremities of the spring are located on opposite sides.

According to a possible embodiment, spring 100 has a width, that is a dimension in a direction transverse to overall line 116, which is substantially constant along that overall line except for the two hooking portions whose dimensions are suitable for inserting the length of spring between side wall 36 of body 12 and the corresponding securing members.

Considering base portion 106 and in particular its flat length, spring 100 has free extremities which lie on opposite sides of the free length of base portion 106.

A calliper for a disc brake according to this invention will be described below with particular reference to the assembled configuration of the body, the pads and the springs as described above.

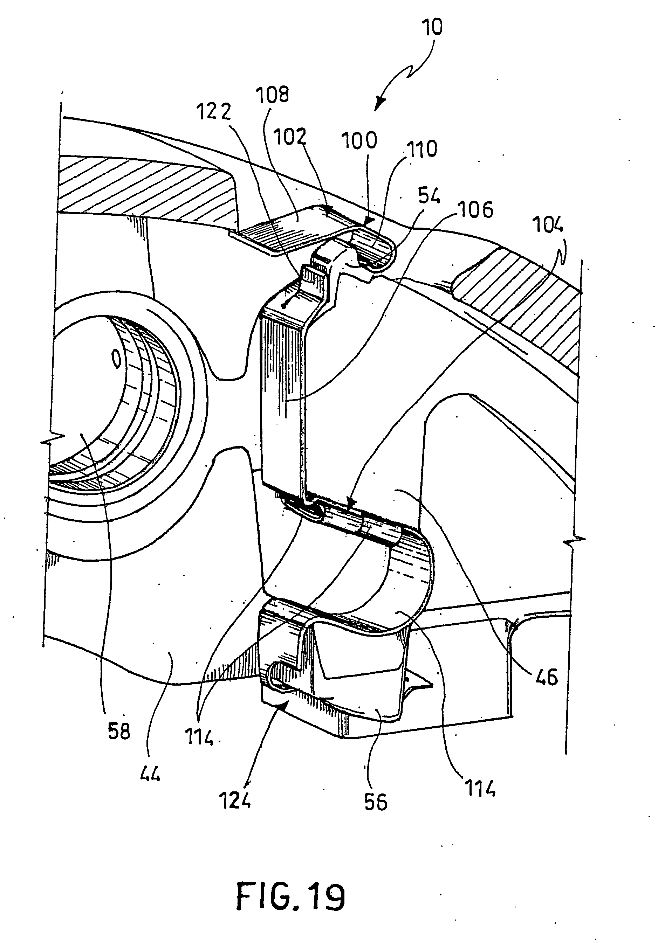

With reference for example to Figure 19, springs 100 are inserted in body 12. In the case where spring 100 is provided with a loop 112 and hooking portions as previously described, loop 112 is inserted into housing 50, preferably in such a way as to come into contact with the walls bounding it. Base portion 106 of spring 100 is located parallel to contact surface 48 of containment wall 46, preferably bearing against it. Connecting portion 110 follows outer surface 46a of containment wall 46, as a result of which outer tooth 54 is inserted in opening 120 of connecting portion 110 and bent lengths 122 deform on the two opposite sides of outer tooth 54.

Second hooking portion 124 envelops the inner extremity of containment wall 46 and in particular follows the inner surface 46b of containment wall 46. Inner tooth 56 is inserted into opening 126 or, in other words, between the two limbs 128a, 128b of the length bent into an "L" shape. Bent lengths 130 deform elastically against the adjacent sides of inner tooth 56 immobilising the inner extremity of the spring.

Inclined walls 108 and tangs 114 are in a configuration which is not elastically deformed because pad 14 is absent.

With reference for example to Figure 15, the pad is inserted in the space defined by body 12 in a radial direction and on the opposite side with respect to connecting members 38. Subsequently the pad is inserted into housing seat 44 between the two springs 100 in a direction parallel to the axis of rotation of the disc.

Bearing surface 22 of supporting plate 16 interacts with inclined wall 108 of spring 100 deforming it elastically outwards in such a way that first thrust portion 102 generates a force against the pad having a component directed towards the axis of rotation of the disc and a component directed towards the other spring.

Similarly wings 24 of supporting plate 16 are inserted into housing 50 of the body and into loop 112 of spring 100 elastically deforming tangs 114 in such a way that second thrust portion 104 generates a force on the pad having a component directed towards the axis of rotation of the disc and a component directed towards the other spring.

Inner bearing surface 30 of wing 24 is thrust against the walls bounding housing 50, with spring 100 in between, by the action of both inclined wall 108 and tongues 114.

What is described above, as for example illustrated in Figure 6, corresponds to the assembled configuration of the calliper at a stage during which no braking force is applied.

It will be appreciated from the above that the provision of a pad and a body according to this invention makes it possible to stabilise the pad avoiding vibration and noise in the course of the stage during which no braking force is applied. This invention is however suitable for stabilising the pad in its seat in the braking stage too, in which one of the springs undergoes greater compression through the tangential drag effect exerted by the disc on the pad.

It is clear that variants and/or additions to what has been described and illustrated above may be provided.

Naturally, in order to implement the invention described above a person skilled in the art could make many modifications, adaptations and replacements of components with others that are functionally equivalent in order to satisfy specific contingent requirements without thereby going beyond the scope of the following claims.

## Claims

1. Pad (14) for a disc brake comprising a supporting plate (16) to which is applied a layer of friction material (18) in which the supporting plate (16) has an extension in a tangential direction (t) which is greater than the tangential extension of the corresponding layer of friction material (18), in which the supporting plate (16) comprises two wings (24) which extend in a substantially tangential direction (t) with respect to the opposite sides of the supporting plate (16), **characterized in that** said wings (24) extend away from the friction material (18) of the supporting plate (16) from a first portion (14a) of the pad, the said portion (14a) being on the side of the inner concave edge (16a) of the pad with respect to a baricentric circumference (26) of the pad itself.

2. Pad according to claim 1, in which the supporting plate (16) comprises extensions (20) which extend on both sides of the friction material (18) in a tangential direction (t), each of the two extensions defining a bearing surface (22) for a spring or resilient member (100).

3. Pad according to claim 2, in which the supporting plate has a concave inner edge (16a), a convex outer edge (16b) and two opposite sides (16c), in which the extensions (20) extend over the height of the plate or the extension of its sides (16c).

4. Pad according to claim 2 or 3, in which the bearing surface (22) is suitable for facing the exterior of a body (12) of a calliper (10) in an assembled configuration of the disc brake.

5. Pad according to claims 1 and 2, in which each of the wings (24) extends from one of the extensions (20) of the opposite sides (16c) of the supporting plate (16) away from the friction material (18).

6. Pad according to claim 1, in which the wings (24) extend away from the friction material (18) of the supporting plate (16) from a first portion (14a) of the pad, the said first portion (14a) being suitable for being located closer to the axis of rotation of the disc than a baricentric circumference (26) of the pad in the assembled configuration of the disc brake.

7. Pad according to one of claims 1 to 6, in which the wings (24) are inclined with respect to the opposite sides (16c) of the supporting plate (16).

8. Pad according to claim 7, in which the wings (24) are inclined with respect to the opposite sides (16c) of the supporting plate (16) in such a way as to lie along a circumference (28) closer to the inner concave edge (16a) than the baricentric circumference (26).

9. Pad according to claim 7 and 6, in which the wings (24) are inclined with respect to the opposite sides (16c) of the supporting plate (16) in such a way as to lie along a circumference (28) which has its centre at the axis of rotation of the disc and passes through a median line of the wings (24) in the assembled configuration of the disc brake.

10. Pad according to claim 7, in which at least one discharge groove (34) constructed at an obtuse angle between an outer bearing surface (32) of the wing (24) and a lateral surface of the supporting plate (16) is provided between a wing (24) and the side of the supporting plate (16).

11. Body (12) of a calliper (10) of a disc brake comprising at least one pad (14) according to one of claims from 1 to 10, in which said pad (14) is housed in at least one seat (44) of said body (12).

12. Body according to claim 11, comprising two side walls (36) suitable for being located on opposite sides of the disc in the assembled configuration of the brake, the said side walls (36) being joined by connecting members (38) which extend substantially transversely to the walls (36), the said connecting members (38) comprising walls arched along a circumference designed to be coaxial with the disc in the assembled configuration of the disc brake, the said arched walls being broken up by openings (40).

13. Body according to claim 12, in which the radial extension of the connecting members (38) is small in comparison with the tangential or angular extension of the same.

14. Body according to one of claims 11 to 13, in which the housing seat (44) is bounded externally by a connecting member (38) and laterally by containment walls (46) which extend substantially in a direction perpendicular to the side walls (36) of the calliper body.

15. Body according to claim 14, in which the containment wall (46) has a housing (50) suitable for receiving a corresponding wing (24) of the pad (14).

16. Body according to claim 15, in which the housing (50) has larger dimensions than the corresponding dimensions of the wing (24) which it is suitable for receiving.

17. Body according to claim 14, in which the containment wall (46) has a contact surface (48) lying opposite to a side surface (17) of the supporting plate (16) and an outer surface (46a) which is inclined with respect to the contact surface (48) in such a way as to extend towards the exterior of the calliper body away from the housing seat (44).

18. Body according to one of claims 11 to 17, in which securing members (54, 56) are provided for resilient members or springs (100) which can be located between the body (12) and the pad (14).

19. Body according to claim 18, in which the securing members (54, 56) are preferably shaped so as to prevent movements by the spring (100) towards the disc in the assembled configuration of the disc brake.

20. Body according to claim 18 or 19, in which the securing members (54, 56) are shaped in such a way as to immobilise the springs (100) between a side wall (36) of the body (12) and the securing members
themselves, in the assembled configuration of the disc brake.

21. Body according to claim 20, in which the securing members (54, 56) are suitable for cooperating with hooking portions (118, 124) of the springs (100) to prevent movement by the springs in a circumferential or tangential direction (t).

22. Body According to one of claims 18 to 21, in which the securing members (54, 56) are suitable for immobilising two extremities of a spring (100), in an inner portion and an outer portion of the calliper body respectively.

23. Body according to one of claims 18 to 22, in which the securing members comprise an external tooth (54) which extends from an outer portion of the body (12) along a radial vector (r) to a specific distance from a side wall (36) of the body.

24. Body according to claim 23, in which the outer tooth (54) extends from a containment wall (46) of the seat (44) housing the pad (14) defining a seat suitable for receiving a portion of a spring (100) between a side wall (36) of the body (12) and the outer tooth.

25. Body according to claim 23 or 24, in which two outer teeth (54) are provided from opposite sides of the seat (44) housing the pad (14) in a portion (42) of the body (12) suitable for respectively acting together with a spring (100).

26. Body according to claim 25, in which the two outer teeth (54) extend from the body (12) alongside the containment walls (46) which bound the seat (44) housing the pad.

27. Body according to one of claims 18 to 26, in which the securing members comprise an inner tooth (56) extending from an inner portion of the body (12) towards the axis of rotation of the disc, in the assembled configuration of the brake, to a specific distance from a side wall (36) of the body.

28. Body according to claim 27, in which the inner tooth (56) extends from a containment wall (46) of the seat (44) housing the pad defining a seat suitable for receiving a portion of a spring (100) between a side wall (36) and the inner tooth.

29. Body according to claim 28, in which the inner tooth (56) extends from an inner surface (46b) of the containment surface (46) defining the seat housing the portion of the spring (100) between the side wall (36) of the body, the inner surface (46b) and the inner tooth (56).

30. Body according to one of claims from 27 to 29, in which two inner teeth (56) from opposite sides of the seat (44) housing the pad (14) are provided in a portion (42) of the body (12) and are capable respectively of cooperating with a spring (100).

31. Body according to claim 30, in which the two inner teeth (56) extend along the containment walls (46) bounding the seat (44) housing the pad.

32. Spring (100) for a calliper (10) of a disc brake, the said spring comprising a cut and bent strip which extends along an overall curvilinear line (116), the said spring being suitable for being located between one side (16c) of a supporting plate (16) for a pad (14) according to one of claims 1 to 10 and walls of a body (12) according to one of claims 11 to 31 in order to hold the pad compressed between two springs and against walls of the calliper body **characterized in that** said spring (100) has a base portion (106) comprising a loop having a position and shape such as to enclose a corresponding wing (24) of said pad (14).

33. Spring according to claim 32, in which the said cut and bent strip comprises at least two portions (102, 104) suitable for interacting with the supporting plate (16) for the pad (14) to transmit a force with components directed towards the axis of rotation of the disc and towards the opposite spring acting on the same pad in the assembled configuration of the disc brake.

34. spring according to claim 33, comprising a base portion (106), from opposite sides of which there depart without any break in continuity a first trust portion (102) and a second thrust portion (104) obtained by bending the strip comprising the spring.

35. Spring according to claim 34, in which the first thrust portion (102) corresponds to an outer extremity of the spring, with reference to the spring assembled in the calliper body, and is suitable for acting on an outer bearing surface (22) of the extensions (20) of the supporting plate (16).

36. Spring according to claim 34 or 35, in which the first thrust portion (102) comprises an inclined wall (108) suitable for bearing against the bearing surface (22) of the supporting plate (16) and connected to the base portion (106) through a bent connecting portion (110) and which in the assembled configuration of the spring on the calliper (10) is suitable for moving away from both the base portion (106) and the pad (14) in a radial and tangential direction towards the exterior of the body (12).

37. Spring according to one of claims 34 to 36 in which the base portion (106) and the first thrust portion (102) define a hook-shaped length suitable for bearing from above on the supporting plate (16) of the pad. (14).

38. Spring according to claim 36, in which the assembled configuration of the spring (100) on the calliper (10) the connecting portion (110) can displace the point at which the inclined wall (108) extends from the connecting portion (110) to a more outer zone which is radially and tangentially further away from the pad (14) than the base portion (106) to form a resilient length which presses the pad (14) inwards against the body (12) of the calliper and tangentially between the two springs acting on the same pad.

39. Spring according to one of claims 34 to 38, in which the first thrust portion (102) has a "C"-shaped length which extends substantially from one part of the base portion (106), one extremity of the first thrust portion (102) being located opposite the remaining thrust portion with respect to the base portion (106).

40. Spring according to one of claims 34 to 38, in which the second thrust portion (104) corresponds to a central portion of the spring (100) and is suitable for acting on a central length of the side (16c) of the supporting plate (16).

41. Spring according to claim 40, in which the second thrust portion (104) is suitable for acting on an outer bearing surface (32) of a wing (24) of the supporting plate (16).

42. Spring according to claim 40 or 41, in which the second thrust portion (104) extends from the base portion (106) from the side opposite the first thrust portion (102).

43. Spring according to claim 42, in which the said second thrust portion (104) is constructed in the length of the spring defining the loop (112).

44. Spring according to claim 42, in which the base portion (106) comprises a flat length and a loop (112) which extends from the same side of the flat length of the base portion (106) with respect to the first thrust portion (102), the said second thrust portion (104) being provided in the length of the spring defining the loop (112).

45. Spring according to one of claims 40 to 44, in which the second thrust portion (104) comprises at least one tang (114) extending in a direction transverse to the overall curvilinear line (116) defining the line of the spring.

46. spring according to claim 45, in which two tangs (114) are provided which are suitable for being bent through approximately 180° with respect to the base portion (106) and which extend from opposite sides of the overall line (116).

47. Spring according to claim 46, in which the two tangs (114) are offset along the overall line (116).

48. Spring according to one of claims 32 to 47, comprising portions (118, 124) hooking onto the body (12) of the calliper and suitable for acting together with securing members (54, 56) of the calliper body (12).

49. Spring according to claim 48 when dependent upon claim 36, in which a first hooking portion (118) comprises a length of the portion (110) connecting the first thrust portion (102) suitable for being inserted between an outer tooth (54) and a side wall (36) of the body (12) to immobilise the spring (100) in a direction parallel to the axis of rotation of the disc in the assembled configuration of the brake.

50. Spring according to claim 49, in which the connecting portion (110) has dimensions transverse to the overall line (116) of the spring which are similar to those of the base portion (106) and the inclined wall (108) and is cut in such a way as to define an opening (120) suitable for housing the outer tooth (54).

51. Spring according to claim 50, in which the said opening (120) has a lesser extent that the width of the connecting portion (110) in a direction transverse to the overall line (116) and is open on one side of the connecting portion (110).

52. Spring according to claim 50 or 51, in which the connecting portion (110) comprises bent lengths (122) which at least partly bound the opening (120), the said bent lengths being suitable for being located on the sides of the outer tooth (54).

53. Spring according to claim 52, in which the connecting portion (110) has a first line of cut (110a) which extends parallel to an overall line (116) of the spring (100) and a further line of cut (110b) perpendicular to the first line of cut (110a) and the overall line (116) and which opens out at the edge of the connecting portion (110), the first line of cut (110a) and the other line of cut (110b) defining a "T"-shaped cut in the connecting portion (110) which bounds the bent lengths (122).

54. Spring according to one of claims 48 to 53, in which a second hooking portion (124) comprises an inner extremity portion of the spring (100) which extends from a base portion (106) and is suitable for being inserted between an inner tooth (56) and a side wall (36) of the body (12) of the calliper immobilising the inner extremity of the spring (100) in a direction parallel to the axis of rotation of the disc in the assembled configuration of the brake.

55. Spring according to claim 54, in which the second hooking portion (124) extends with continuity from the base portion (106), being bent substantially into an "L"-shape in order to enclose one extremity of a containment wall (46) of the seat (44) housing a pad (14).

56. Spring according to claim 54 or 55, in which the second hooking portion (124) has dimensions transversely to the overall line (116) of the spring which are smaller than those of the base portion (106) and is cut in such a way as to defined an opening (126) suitable for housing an inner tooth (56) of the body (12) to immobilise movements by the inner extremity of the spring (100) in a tangential direction (t).

57. Spring according to claim 56, in which the second hooking portion (124) is cut into an "L"-shape, a first limb (128a) of the "L" being designed to be located between the inner tooth (56) and a side wall (36) of the calliper body (12) and a second limb (128b) of the "L" being suitable for enclosing one side of the inner tooth (56).

58. Spring according to claim 56, in which the second hooking portion (124) is cut into an "L"-shape, a first limb (128a) of the "L" being parallel to the overall line (116) and a second limb (128b) of the "L" being transverse ,to the overall line (116).

59. Spring according to claim 57 or 58, in which the second hooking portion (124) has bent lengths (130) which at least partly bound the opening (126) corresponding to the inner tooth (56), the said bent lengths (128) being suitable for being located on the sides of the inner tooth (56).

60. Spring according to one of claims 48 to 59, in which the spring (100) has a width, that is a dimension in a direction transverse to the overall line (116), which is substantially constant along the overall line with the exception of the two hooking portions whose dimensions are suitable for inserting the length of the spring between the side wall (36) of the body (12) and the corresponding securing members.

61. Spring according to one of claims 34 to 60, in which the free extremities of the spring are located on opposite sides of a flat length of the base portion (106).

62. Calliper for a disc brake comprising at least one pad (14) according to one of claims 1 to 10, a body (12) according to one of claims 11 to 31 and at least one spring according to one of claims 32 to 61.

## Patentansprüche

1. Bremsbelag (14) für eine Scheibenbremse aufweisend eine Trägerplatte (16) auf welches eine Lage von Reibungsmaterial (18) aufgebracht ist, in welchem die Trägerplatte (16) eine Verlängerung in eine tangentiale Richtung (t) hat, welche größer ist als die tangentiale Verlängerung von der zugehörigen Schicht von Reibungsmaterial (18), in welchem die Trägerplatte (16) aufweist, zwei Flügel (24), welche sich erstrecken in eine im Wesentlichen tangentialen Richtung (t) hinsichtlich der gegenüberliegenden Seiten von der Trägerplatte (16)
***gekennzeichnet dadurch dass***
die Flügel (24) sich erstrecken weg von dem Reibungsmaterial (18) von der Trägerplatte (16) von einem ersten Teil (14a) von dem Bremsbelag, der erste Teil (14a) befindet sich auf der Seite von der inneren konkaven Kante (16a) von dem Bremsbelag hinsichtlich eines baryzentrischen Umfangs (26) von dem Bremsbelag selbst.

2. Bremsbelag gemäß Anspruch 1, in welchem die Trägerplatte (16) aufweist, Verlängerungen (20) welche sich erstrecken an beiden Seiten von dem Reibungsmaterial (18) in eine tangentiale Richtung (t), jede von den beiden Verlängerungen definiert eine Auflagefläche (22) für eine Feder oder ein elastisches Element (100).

3. Bremsbelag gemäß Anspruch 2, in welchem die Trägerplatte eine konkave innere Kante (16a) hat, eine konvexe äußere Kante (16b) und zwei sich gegenüberliegende Seiten (16c), in welchem die Verlängerungen (20) sich erstrecken über die Höhe von der Platte oder die Verlängerung von den Seiten (16c).

4. Bremsbelag gemäß einer der Ansprüche 2 oder 3, in welchem die Auflagefläche (22) geeignet ist dem Äußeren von einem Körper (12) von einem Bremssattel (10) in einer montierten Konfiguration von der Scheibenbremse zugewandt zu sein.

5. Bremsbelag gemäß Ansprüchen 1 und 2, in welchem jeder von den Flügeln (24) sich erstreckt von einer von den Verlängerungen (20) zu den gegenüberliegenden Seiten (16c) von der Trägerplatte (16) weg von dem Reibungsmaterial (18).

6. Bremsbelag gemäß Anspruch 1, in welchem sich die Flügel (24) erstrecken, weg von dem Reibungsmaterial (18) von der Trägerplatte (16) von einem ersten Teil (14a) von dem Bremsbelag, der erste Teil (14a) geeignet um näher angeordnet zu sein an der Rotationsachse von der Scheibe, als ein baryzentrischer Umfang (26) von dem Bremsbelag in der montierten Konfiguration von der Scheibenbremse.

7. Bremsbelag gemäß einer der Ansprüche 1 bis 6, in welchem die Flügel (24) geneigt sind hinsichtlich der gegenüberliegenden Seiten (16c) von der Trägerplatte (16).

8. Bremsbelag gemäß Anspruch 7, in welchem die Flügel (24) geneigt sind hinsichtlich den gegenüberliegenden Seiten (16c) von der Trägerplatte (16) in einer solchen Art und Weise, dass sie entlang eines Umfangs (28) liegen, näher zu der inneren konkaven Kante (16a) als der baryzentrische Umfang (26).

9. Bremsbelag gemäß der Ansprüche 7 und 6, in welchem die Flügel (24) geneigt sind hinsichtlich der gegenüberliegenden Seiten (16c) von der Trägerplatte (16) in einer solchen Art und Weise, dass sie entlang eines Umfanges (28) liegen, welcher sein Zentrum an der Drehachse von der Scheibe hat und durch eine Mittellinie von den Flügeln (24) in der montierten Konfiguration von der Scheibenbremse geht.

10. Bremsbelag gemäß Anspruch 7, in welchem zumindest eine Abfuhrnut (34) konstruiert ist in einem stumpfen Winkel zwischen einer äußeren Auflagefläche (32) von dem Flügel (24) und einer Seitenfläche von der Trägerplatte (16) und die bereitgestellt wird zwischen einem Flügel (24) und den Seiten von der Trägerplatte (16).

11. Körper (12) von einem Bremssattel (10) von einer Scheibenbremse aufweisend zumindest einen Bremsbelag (14) gemäß einer der Ansprüche 1 bis 10, in welchem der Bremsbelag (14) untergebracht ist in zumindest einem Sitz (44) von dem Körper (12).

12. Körper gemäß Anspruch 11, aufweisend zwei Seitenwände (36) geeignet um angeordnet zu werden an gegenüberliegenden Seiten von der Scheibe in der montierten Konfiguration von der Bremse, die Seitenwände (36) verbunden durch Verbindungselemente (38) welche sich im Wesentlichen quer zu den Wänden (36) erstrecken, die Verbindungselemente (38) aufweisend Wände gewölbt entlang eines Umfanges gestaltet um gleichachsig mit der Scheibe in der montierten Konfiguration von der Scheibenbremse zu sein, die gewölbten Wände sind aufgebrochen durch Öffnungen (40).

13. Körper gemäß Anspruch 12, in welchem die radiale Verlängerung von den Verbindungselementen (38) klein ist im Vergleich zu der tangentialen oder winkelförmigen Verlängerung von derselben.

14. Körper gemäß einer der Ansprüche 11 bis 13, in welchem der Gehäusesitz (44) begrenzt wird extern durch ein Verbindungselement (38) und seitlich durch Eindämmungswände (46), welche sich im Wesentlichen erstrecken in eine Richtung senkrecht zu den Seitenwänden (36) von dem Bremssattelkörper.

15. Körper gemäß Anspruch 14, in welchem die Eindämmungswand (46) ein Gehäuse (50) aufweist, geeignet zum Empfangen eines entsprechenden Flügels (24) von dem Bremsbelag (14).

16. Körper gemäß Anspruch 15, in welchem das Gehäuse (50) größere Ausmaße als die zugehörigen Ausmaße von dem Flügel (24) hat, für welches es geeignet ist diesen aufzunehmen.

17. Körper gemäß Anspruch 14, in welchem die Eindämmungswand (46) eine Kontaktfläche (48) gegenüberliegend zu einer Seitenfläche (17) von der Trägerplatte (16) hat und eine äußere Fläche (46a), welche geneigt ist hinsichtlich der Kontaktfläche (48) in einer solchen Art und Weise, um sich zu erstrecken zu dem Äußeren von dem Bremssattelkörper weg von dem Gehäusesitz (44).

18. Körper gemäß einer der Ansprüche 11 bis 17, in welchem Sicherungselemente (54, 56) bereitgestellt werden für die elastischen Elemente oder Federn (100), welche angeordnet werden können zwischen dem Körper (12) und dem Bremsbelag (14).

19. Körper gemäß Anspruch 18, in welchem die Sicherungselemente (54, 56) bevorzugt so geformt sind, dass sie Bewegungen der Feder (100) in Richtung der Scheibe in der montierten Konfiguration von der Scheibenbremse verhindern.

20. Körper gemäß einer der Ansprüche 18 oder 19, in welchem die Sicherungselemente (54, 56) so geformt sind, um die Federn (100) zwischen einer Seitenwand (36) von dem Körper (12) und den Sicherungselementen selbst in der montierten Konfiguration von der Scheibenbremse bewegungsunfähig zu machen.

21. Körper gemäß Anspruch 20, in welchem die Sicherungselemente (54, 56) geeignet sind zum Zusammenwirken mit Hackenteilen (118, 124) von den Federn (100), um Bewegung durch die Federn in eine umfängliche oder tangentiale Richtung (t) zu verhindern.

22. Körper gemäß einer der Ansprüche 18 bis 21, in welchem die Sicherungselemente (54, 56) geeignet sind, um zwei Extremitäten von einer Feder (100) bewegungsunfähig zu machen, in einem inneren Teil beziehungsweise einem äußeren Teil von dem Bremssattel.

23. Körper gemäß einer der Ansprüche 18 bis 22, in welchem die Sicherungselemente aufweisen einen externen Zahn (54), welcher sich erstreckt von einem äußeren Teil von dem Körper (12) entlang einem radialen Vektor (r) in einem spezifischen Abstand von einer Seitenwand (36) von dem Körper.

24. Körper gemäß Anspruch 23, in welchem der äußere Zahn (54) sich erstreckt von einer Eindämmungswand (46) von dem Sitz (44) aufnehmend den Bremsbelag (14) definierend einen Sitz geeignet zum Empfangen eines Teils von einer Feder (100) zwischen einer Seitenwand (36) von dem Körper (12) und dem äußeren Zahn.

25. Körper gemäß einer der Ansprüche 23 oder 24, in welchem zwei äußere Zähne (54) bereitgestellt werden von den gegenüberliegenden Seiten von dem Sitz (44) aufnehmend den Bremsbelag (14) in einem Teil (42) von dem Körper (12) geeignet zum gegenseitigen Zusammenwirken mit einer Feder (100).

26. Körper gemäß Anspruch 25, in welchem die zwei äußeren Zähne (54) sich erstrecken von dem Körper (12) entlang der Eindämmungswände (46), welche den Sitz (44) aufnehmend den Bremsbelag begrenzen.

27. Körper gemäß einer der Ansprüche 18 bis 26, in welchem die Sicherungselemente aufweisen einen inneren Zahn (56), sich erstreckend von einem inneren Teil von dem Körper (12) entlang der Rotationsachse von der Scheibe, in der montierten Konfiguration von der Bremse, in einem spezifischen Abstand von einer Seitenwand (36) von dem Körper.

28. Körper gemäß Anspruch 27, in welchem der innere Zahn (56) sich erstreckt von einer Eindämmungswand (46) von dem Sitz (44) aufnehmend den Bremsbelag definierend einen Sitz geeignet zum Empfangen eines Teils von einer Feder (100) zwischen einer Seitenwand (36) und dem inneren Zahn.

29. Körper gemäß Anspruch 28, in welchem der innere Zahn (56) sich erstreckt von einer inneren Fläche (46b) von der Eindämmungsfläche (46) definierend den Sitz aufnehmend den Teil von der Feder (100) zwischen der Seitenwand (36) von dem Körper, die innere Fläche (46) und dem inneren Zahn (56).

30. Körper gemäß einer der Ansprüche von 27 bis 29, in welchem zwei innere Zähne (56) von gegenüberliegenden Seiten von dem Sitz (44) aufnehmend den Bremsbelag (14) bereitgestellt werden in einem Teil (42) von dem Körper (12) und die fähig sind jeweils mit einer Feder (100) zusammenzuwirken.

31. Körper gemäß Anspruch 30, in welchem die zwei inneren Zähne (56) sich erstrecken entlang der Eindämmungswände (46) begrenzend den Sitz (44) aufnehmend den Bremsbelag.

32. Feder (100) für einen Bremssattel (10) von einer Bremsscheibe, die Feder aufweisend einen geschnittenen und gebogenen Streifen, welcher sich erstreckt entlang einer allgemeinen kurvenlinearen Linie (116), die Feder geeignet um angeordnet zu werden zwischen einer Seite (16c) von einer Trägerplatte (16) für einen Bremsbelag (14) gemäß einer der Ansprüche 1 bis 10 und Wände von einem Körper (12) gemäß einer der Ansprüche 11 bis 31, um den Bremsbelag gedrückt zwischen zwei Federn und gegen Wände von dem Bremssattelkörper zu halten
***gekennzeichnet dadurch dass***
die Feder (100) einen Basisteil (106) hat, aufweisend eine Schleife mit einer Position und einer Form, so dass sie einen zugehörigen Flügel (24) von dem Bremsbelag (14) umgibt.

33. Feder gemäß Anspruch 32, in welcher der geschnittene und gebogene Streifen aufweist zumindest zwei Teile (102, 104) geeignet zum Zusammenwirken mit der Trägerplatte (16) für den Bremsbelag (14), um eine Kraft zu übertragen mit Elementen gerichtet zu der Drehachse von der Scheibe und zu der gegenüberliegenden Feder wirkend auf den gleichen Bremsbelag in der montierten Konfiguration von der Scheibenbremse.

34. Feder gemäß Anspruch 33 aufweisend ein Basisteil (106), von gegenüberliegenden Seiten von welchen sich ein erstes Druckteil (102) und ein zweites Druckteil (104) erstrecken ohne einen Verlust der Kontinuität, erhalten durch Biegen des Streifens, aufweisend die Feder.

35. Feder gemäß Anspruch 34, in welcher das erste Druckteil (102), zugehörig ist zu einer äußeren Extremität von der Feder mit Referenz zu der Feder, montiert in dem Bremssattelkörper und welche geeignet ist zum Agieren auf einer äußeren Auflagefläche (22) von den Verlängerungen (20) von der Trägerplatte (16).

36. Feder gemäß Anspruch 34 oder 35, in welcher das erste Druckteil (102) aufweist eine geneigte Wand (108), geeignet zur Auflage gegen die Auflagefläche (22) von der Trägerplatte (16) und verbunden zu dem Basisteil (106) durch ein gebogenes Verbindungsteil (110) und welches in der montierten Konfigurationen von der Feder in dem Bremssattel (10) geeignet ist, sich zu bewegen weg von dem Basisteil (106) und dem Bremsbelag (14) in eine radial- und tangentiale Richtung zu dem Äußeren von dem Körper (12).

37. Feder gemäß einer der Ansprüche 34 bis 36, in welcher das Basisteil (106) und das erste Druckteil (102) eine hakenförmige Länge definieren, geeignet zum Halten von oben auf der Trägerplatte (16) von dem Bremsbelag (14).

38. Feder gemäß Anspruch 36, in welcher die montierte Konfiguration von der Feder (100) an dem Bremssattel (10), das Verbindungsteil (110) kann den Punkt verschieben, an welchem die geneigte Wand (108) sich erstreckt von dem Verbindungsteil (110) zu einer mehr äußeren Zone, welche radial und tangential weiter weg ist von dem Bremsbelag (14) ist, als das Basisteil (106), um eine elastische Länge zu bilden, welche den Bremsbelag (14) nach innen gegen den Körper (12) von dem Bremssattel und tangential zwischen den zwei Federn agierend auf dem gleichen Bremsbelag drückt.

39. Feder gemäß einer der Ansprüche 34 bis 38, in welcher der erste Druckteil (102) eine "C"-förmige Länge hat, welche sich im Wesentlichen erstreckt von einem Teil von dem Basisteil (106), eine Extremität von dem ersten Druckteil (102) ist angeordnet gegenüber dem übergebliebenen Druckteil hinsichtlich des Basisteils (106).

40. Feder gemäß einer der Ansprüche 34 bis 38, in welcher der zweite Druckteil (104) zugehörig ist zu einem zentralen Teil von der Feder (100) und welcher geeignet ist zum Agieren auf einer zentralen Länge von der Seite (16c) von der Trägerplatte (16).

41. Feder gemäß Anspruch 40, in welcher der zweite Druckteil (104) geeignet ist zum Agieren auf einer äußeren Auflagefläche (32) von einem Flügel (24) von der Trägerplatte (16).

42. Feder gemäß Anspruch 40 oder 41, in welcher der zweite Druckteil (104) sich erstreckt von dem Basisteil (106) von der Seite gegenüberliegend dem ersten Druckteil (102).

43. Feder gemäß Anspruch 42, in welcher das zweite Druckteil (104) konstruiert ist in der Länge von der Feder definierend die Schleife (112).

44. Feder gemäß Anspruch 42, in welcher der Basisteil (106) eine flache Länge und eine Schleife (112) aufweist, welche sich erstreckt von den gleichen Seiten von der flachen Länge von dem Basisteil (106) hinsichtlich des ersten Druckteils (102), das zweite Druckteil (104) bereitgestellt in der Länge von der Feder, definierend die Schleife (112).

45. Feder gemäß einer der Ansprüche 40 bis 44, in welcher das zweite Druckteil (104) aufweist zumindest einen Dom (114), sich erstreckend in eine Richtung quer zu der allgemeinen kurvenlinearen Linie (116), definierend die Linie von der Feder.

46. Feder gemäß Anspruch 45, in welcher zwei Domen (114) bereitgestellt werden, welche geeignet sind um gebogen zu werden ungefähr 180° hinsichtlich des Basisteils (106) und welche sich erstrecken von gegenüberliegenden Seiten von der allgemeinen Linie (116).

47. Feder gemäß Anspruch 46, in welcher die zwei Domen (114) versetzt sind entlang der gemeinsamen Linie (116).

48. Feder gemäß einer der Ansprüche 32 bis 47, aufweisend Teile (118, 124) sich einhakend in den Körper (12) von dem Bremssattel und geeignet zum Zusammenwirken mit den Sicherungselementen (54, 56) von dem Bremssattelkörper (12).

49. Feder gemäß Anspruch 48, wenn abhängig von Anspruch 36, in welcher ein erster Hakenteil (118) aufweist eine Länge von dem Teil (110), verbindend den ersten Druckteil (102) geeignet um eingeführt zu werden zwischen einem äußeren Zahn (54) und einer Seitenwand (36) von dem Körper (12), um die Feder (100) in einer Richtung parallel zu der Drehachse von der Schiebe in der montierten Konfiguration von der Bremse bewegungsunfähig zu machen.

50. Feder gemäß Anspruch 49, in welcher das Verbindungsteil (110) Ausmaße quer zu der allgemeinen Linie (116) von der Feder hat, welche gleich sind zu denen des Basisteils (106) und der geneigten Wand (108) und welches geschnitten ist in einer solchen Art und Weise, um eine Öffnung (120) zu definieren, geeignet zur Aufnahme des äußeren Zahns (54).

51. Feder gemäß Anspruch 50, in welcher die Öffnung (120) ein kleineres Ausmaß als die Weite von dem Verbindungsteil (110) in eine Richtung quer zu der allgemeine Linie (116) hat und welche offen ist an einer Seite von dem Verbindungsteil (110).

52. Feder gemäß Anspruch 50 oder 51, in welcher das Verbindungsteil (110) gebogene Längen (122) aufweist, welche zumindest teilweise gebogen sind um die Öffnung (120) zu begrenzen, die gebogenen Längen sind geeignet um an den Seiten von dem äußeren Zahn (54) platziert zu werden.

53. Feder gemäß Anspruch 52, in welcher das Verbindungsteil (110) eine erste Schnittlinie (110a) hat, welche sich erstreckt parallel zu einer allgemeinen Linie (116) von der Feder (100) und eine weitere Schnittlinie (110b) senkrecht zu der ersten Schnittlinie (110a) und der allgemeinen Linie (116) und welche geöffnet ist nach außen an den Kanten von dem Verbindungsteil (110), die erste Schnittlinie (110a) und die andere Schnittlinie (110b) definieren einen "T"-förmigen Schnitt in dem Verbindungsteil (110), welches die Biegelängen (122) begrenzt.

54. Feder gemäß einer der Ansprüche 48 bis 53, in welcher ein zweiter Hackenteil (124) aufweist, einen inneren Extremitätsteil von der Feder (100), welcher sich erstreckt von einem Basisteil (106) und welcher geeignet ist zum Einfügen zwischen einem inneren Zahn (56) und einer Seitenwand (36) von dem Körper (12) von dem Bremssattel, um die innere Extremität von der Feder (100) bewegungsunfähig zu machen in eine Richtung parallel zu der Rotationsachse von der Scheibe in der montierten Konfiguration von der Bremse.

55. Feder gemäß Anspruch 54, in welcher der zweite Hackenteil (124) sich erstreckt durchgehend von dem Basisteil (106) im Wesentlichen gebogen in eine "L"-Form, um eine Extremität von einer Eindämmungswand (46) von dem Sitz (44) aufnehmend einen Bremsbelag (14) zu umschließen.

56. Feder gemäß Anspruch 54 oder 55, in welcher der zweite Hakenteil (124) Ausmaße hat quer zu der allgemeinen Linie (116) von der Feder, welche kleiner sind als die von dem Basisteil (106) und welches geschnitten ist in einer solchen Art und Weise, um eine Öffnung (126) zu definieren, geeignet für die Aufnahme eines inneren Zahns (56) von dem Körper (12), um Bewegungen durch die innere Extremität von der Feder (100) in eine tangentiale Richtung (t) zu verhindern.

57. Feder gemäß Anspruch 56, in welcher der zweite Hakenteil (124) in eine "L"-Form geschnitten ist, ein erstes Glied (128a) von dem "L" konstruiert, um zwischen dem inneren Zahn (56) und einer Seitenwand (36) von dem Bremssattelkörper (12) angeordnet zu werden und einem zweiten Glied (128b) von dem "L" geeignet ist, um eine Seite von dem inneren Zahn (56) zu umschließen.

58. Feder gemäß Anspruch 56, in welcher der zweite Hakenteil (124) geschnitten ist in eine "L"-Form, ein erstes Glied (128a) von dem "L" parallel zu der allgemeinen Linie (116) und ein zweites Glied (128b) von dem "L" quer ist zu der allgemeinen Linie (116).

59. Feder gemäß Anspruch 57 oder 58, in welcher der zweite Hakenteil (124) gebogene Längen (130) hat, welche zumindest zum Teil die Öffnung (126) begrenzen, zugehörig zu dem inneren Zahn (56), die gebogenen Längen (128) sind geeignet, um an den Seiten von dem inneren Zahn (56) angeordnet zu werden.

60. Feder gemäß einer der Ansprüche 48 bis 59, in welcher die Feder (100) eine Weite hat, welche ein Ausmaß in eine Richtung quer zu der allgemeinen Linie (116) hat, welche im Wesentlichen konstant entlang der allgemeinen Linie ist, mit der Ausnahme von den zwei Hakenteilen, deren Ausmaße geeignet sind zum Einführen der Länge von der Feder zwischen der Seitenwand (36) von dem Körper (12) und den zugehörigen Sicherungselementen.

61. Feder gemäß einer der Ansprüche 34 bis 60, in welcher die freie Extremitäten von der Feder angeordnet werden auf gegenüberliegenden Seiten von einer flachen Länge von dem Basisteil (106).

62. Bremssattel für eine Scheibenbremse aufweisend zumindest einen Bremsbelag (14) gemäß einer der Ansprüche 1 bis 10, ein Körper (12) gemäß einer der Ansprüche 11 bis 31 und zumindest eine Feder gemäß einer der Ansprüche 32 bis 61.

## Revendications

1. Patin (14) pour un frein à disque comprenant une plaque de support (16) à laquelle est appliquée une couche de matériau de friction (18), dans lequel la plaque de support (16) présente une extension dans une direction tangentielle (t) qui est supérieure à l'extension tangentielle de la couche correspondante de matériau de friction (18), dans lequel la plaque de support (16) comprend deux ailes (24) qui s'étendent dans une direction sensiblement tangentielle (t) par rapport aux côtés opposés de la plaque de support (16),
**caractérisé en ce que** lesdites ailes (24) s'étendent en éloignement du matériau de friction (18) de la plaque de support (16) depuis une première portion (14a) du patin, ladite portion (14a) étant sur le côté du bord concave intérieur (16a) du patin par rapport à une circonférence barycentrique (26) du patin lui-même.

2. Patin selon la revendication 1, dans lequel la plaque de support (16) comprend des extensions (20) qui s'étendent sur les deux côtés du matériau de friction (18) dans une direction tangentielle (t), chacune des deux extensions définissant une surface portante (22) pour un ressort ou un élément élastique (100).

3. Patin selon la revendication 2, dans lequel la plaque de support possède un bord intérieur concave (16a), un bord extérieur convexe (16b) et deux côtés opposés (16c), dans lequel les extensions (20) s'étendent au-dessus de la hauteur de la plaque ou de l'extension de ses côtés (16c).

4. Patin selon la revendication 2 ou 3, dans lequel la surface portante (22) est appropriée pour faire face vers l'extérieur d'un corps (12) d'un étrier (10) dans une configuration assemblée du frein à disque.

5. Patin selon les revendications 1 et 2, dans lequel chacune des ailes (24) s'étend depuis l'une des extensions (20) des côtés opposés (16c) de la plaque de support (16) en éloignement du matériau de friction (18).

6. Patin selon la revendication 1, dans lequel les ailes (24) s'étendent en éloignement du matériau de friction (18) de la plaque de support (16) depuis une première portion (14a) du patin, ladite première portion (14a) étant appropriée pour être placée plus proche de l'axe de rotation du disque qu'une circonférence barycentrique (26) du patin dans la configuration assemblée du frein à disque.

7. Patin selon l'une des revendications 1 à 6, dans lequel les ailes (24) sont inclinées par rapport aux côtés opposés (16c) de la plaque de support (16).

8. Patin selon la revendication 7, dans lequel les ailes (24) sont inclinées par rapport aux côtés opposés (16c) de la plaque de support (16), de manière à se trouver le long d'une circonférence (28) plus proche du bord concave intérieur (16a) que la circonférence barycentrique (26).

9. Patin selon la revendication 6 et 7, dans lequel les ailes (24) sont inclinées par rapport aux côtés opposés (16c) de la plaque de support (16), de manière à se trouver le long d'une circonférence (28) dont le centre se trouve à l'axe de rotation du disque et passe par une ligne médiane des ailes (24) dans la configuration assemblée du frein à disque.

10. Patin selon la revendication 7, dans lequel au moins une gorge de décharge (34) réalisée sous un angle obtus entre une surface portante extérieure (32) de l'aile (24) et une surface latérale de la plaque de support (16) est prévue entre une aile (24) et le côté de la plaque de support (16).

11. Corps (12) d'étrier (10) d'un frein à disque, comprenant au moins un patin (14) selon l'une des revendications 1 à 10, dans lequel ledit patin (14) est logé dans au moins un siège (44) dudit corps (12).

12. Corps selon la revendication 11, comprenant deux parois latérales (36) appropriées pour être placées sur des côtés opposés du disque dans la configuration assemblée du frein, lesdites parois latérales (36) étant jointes par des éléments de connexion (38) qui s'étendent sensiblement transversalement par rapport aux parois (36), lesdits éléments de connexion (38) comprenant des parois en arc le long d'une circonférence conçue pour être coaxiale avec le disque dans la configuration assemblée du frein à disque, lesdites parois en arc étant interrompues par des ouvertures (40).

13. Corps selon la revendication 12, dans lequel l'extension radiale des éléments de connexion (38) est faible par comparaison à l'extension tangentielle ou angulaire de ceux-ci.

14. Corps selon l'une des revendications 11 à 13, dans lequel le siège (44) de logement est bordé du côté externe par un élément de connexion (38), et du côté latéral par des parois de retenue (46) qui s'étendent sensiblement dans une direction perpendiculaire aux parois latérales (36) du corps d'étrier.

15. Corps selon la revendication 14, dans lequel la paroi de retenue (46) possède un boîtier (50) approprié pour recevoir une aile correspondante (24) du patin (14).

16. Corps selon la revendication 15, dans lequel le boîtier (50) présente des dimensions plus importantes que les dimensions correspondantes de l'aile (24) qui est appropriée pour la réception.

17. Corps selon la revendication 14, dans lequel la paroi de retenue (46) possède une surface de contact (48) située à l'opposé d'une surface latérale (17) de la plaque de support (16), et une surface extérieure (46a) qui est inclinée par rapport à la surface de contact (48), de manière à s'étendre vers l'extérieur du corps d'étrier en éloignement du siège de logement (44).

18. Corps selon l'une des revendications 11 à 17, dans lequel des éléments de fixation (54, 56) sont prévus pour des éléments élastiques ou des ressorts (100) qui peuvent être placés entre le corps (12) et le patin (14).

19. Corps selon la revendication 18, dans lequel les éléments de fixation (54, 56) sont de préférence conformés de manière à empêcher des mouvements par le ressort (100) vers le disque dans la configuration assemblée du frein à disque.

20. Corps selon la revendication 18 ou 19, dans lequel les éléments de fixation (54, 56) sont conformés de manière à immobiliser les ressorts (100) entre une paroi latérale (36) du corps (12) et les éléments de fixation eux-mêmes, dans la configuration assemblée du frein à disque.

21. Corps selon la revendication 20, dans lequel les éléments de fixation (54, 56) sont appropriés pour coopérer avec des portions d'accrochage (118, 124) des ressorts (100) pour empêcher un mouvement par les ressorts dans une direction circonférentielle ou tangentielle (t).

22. Corps selon l'une des revendications 18 à 21, dans lequel les éléments de fixation (54, 56) sont appropriés pour immobiliser deux extrémités d'un ressort (100), dans une portion intérieure et une portion extérieure du corps d'étrier respectivement.

23. Corps selon l'une des revendications 18 à 22, dans lequel les éléments de fixation comprennent une dent externe (54) qui s'étend depuis une portion extérieure du corps (12) le long d'un vecteur radial (r) à une distance spécifique depuis une paroi latérale (36) du corps.

24. Corps selon la revendication 23, dans lequel la dent extérieure (54) s'étend depuis une paroi de retenue (46) du siège (44) abritant le patin (14) qui définit un siège approprié pour recevoir une portion d'un ressort (100) entre une paroi latérale (36) du corps (12) et la dent extérieure.

25. Corps selon la revendication 23 ou 24, dans lequel deux dents extérieures (54) sont prévues depuis des côtés opposés du siège (44) abritant le patin (14) dans une portion (42) du corps (12) appropriée pour agir respectivement ensemble avec un ressort (100).

26. Corps selon la revendication 25, dans lequel les deux dents extérieures (54) s'étendent depuis le corps (12) le long des parois de retenue (46) qui bordent le siège (44) abritant le patin.

27. Corps selon l'une des revendications 18 à 26, dans lequel les éléments de fixation comprennent une dent intérieure (56) s'étendant depuis une portion intérieure du corps (12) vers l'axe de rotation du disque, dans la configuration assemblée du frein, jusqu'à une distance spécifique depuis une paroi latérale (36) du corps.

28. Corps selon la revendication 27, dans lequel la dent intérieure (56) s'étend depuis une paroi de retenue (46) du siège (44) qui abrite le patin définissant un siège approprié pour recevoir une portion d'un ressort (100) entre une paroi latérale (36) et la dent intérieure.

29. Corps selon la revendication 28, dans lequel la dent intérieure (56) s'étend depuis une surface intérieure (46b) de la surface de retenue (44) définissant le siège qui abrite la portion du ressort (100) entre la paroi latérale (36) du corps, la surface intérieure (46b) et la dent intérieure (56).

30. Corps selon l'une des revendications 27 à 29, dans lequel deux dents intérieures (56) depuis les côtés opposés du siège (44) abritant le patin (14) sont prévues dans une portion (42) du corps (12) et sont capables respectivement de coopérer avec un ressort (100).

31. Corps selon la revendication 30, dans lequel les deux dents intérieures (56) s'étendent le long des parois de retenue (46) qui bordent le siège (44) abritant le patin.

32. Ressort (100) pour un étrier (10) d'un frein à disque, ledit ressort comprenant un ruban découpé et cintré qui s'étend le long d'une ligne courbe globale (116), ledit ressort étant approprié pour être placé entre un côté (16c) d'une plaque de support (16) pour un patin (14) selon l'une quelconque des revendications 1 à 10, et des parois d'un corps (12) selon l'une des revendications 11 à 31 afin de maintenir le patin comprimé entre deux ressorts et contre les parois du corps d'étrier, **caractérisé en ce que** ledit ressort (100) possède une portion de base (106) comprenant une boucle ayant une position et une forme de manière à enfermer une aile correspondante (24) dudit patin (14).

33. Ressort selon la revendication 32, dans lequel ledit ruban découpé et cintré comprend au moins deux portions (102, 104) appropriées pour coopérer avec la plaque de support (16) pour le patin (14) et transmettre une force avec des composantes dirigées vers l'axe de rotation du disque et vers le ressort opposé agissant sur le même patin dans la configuration assemblée du frein à disque.

34. Ressort selon la revendication 33, comprenant une portion de base (106), depuis des côtés opposés de laquelle partent sans aucune rupture de continuité une première portion de poussée (102) et une seconde portion de poussée (104) obtenues en cintrant le ruban constituant le ressort.

35. Ressort selon la revendication 34, dans lequel la première portion de poussée (102) correspond à une extrémité extérieure du ressort, en se référant aux ressorts assemblés dans le corps d'étrier, et est appropriée pour agir sur une surface portante extérieure (22) des extensions (20) de la plaque de support (16).

36. Ressort selon la revendication 34 ou 35, dans lequel la première portion de poussée (102) comprend une paroi inclinée (108) appropriée pour venir porter contre la surface portante (22) de la plaque de support (16) est reliée à la portion de base (106) via une portion de liaison cintrée (110) et qui, dans la configuration assemblée du ressort sur l'étrier (10), est appropriée pour se déplacer en éloignement à la fois de la portion de base (106) et du patin (14) dans une direction radiale et tangentielle vers l'extérieur du corps (12).

37. Ressort selon l'une des revendications 34 à 36, dans lequel la portion de base (106) et la première portion de poussée (102) définissent une longueur en forme de crochet qui convient pour venir porter depuis le haut sur la plaque de support (16) du patin (14).

38. Ressort selon la revendication 36, dans lequel dans la configuration assemblée du ressort (100) sur l'étrier (10), la portion de connexion (110) peut déplacer le point auquel la paroi inclinée (108) s'étend depuis la partie de liaison (110) vers une zone plus extérieure qui est radialement et tangentiellement plus loin du patin (14) que la portion de base (106) pour former une longueur élastique qui presse le patin (14) vers l'intérieur contre le corps (12) de l'étrier et tangentiellement entre les deux ressorts agissant sur le même patin.

39. Ressort selon l'une des revendications 34 à 38, dans lequel la première portion de poussée (102) possède une longueur en forme de "C" qui s'étend sensiblement depuis une partie de la portion de base (106), une extrémité de la première portion de poussée (102) étant située à l'opposé de la portion de poussée restante par rapport à la portion de base (106).

40. Ressort selon l'une des revendications 34 à 38, dans lequel la seconde portion de poussée (104) correspond à une portion centrale du ressort (100) et est appropriée pour agir sur une longueur centrale du côté (16c) de la plaque de support (16).

41. Ressort selon la revendication 40, dans lequel la seconde portion de poussée (104) est appropriée pour agir sur une surface portante extérieure (32) d'une aile (24) de la plaque de support (16).

42. Ressort selon la revendication 40 ou 41, dans lequel la seconde portion de poussée (104) s'étend depuis la portion de base (106) depuis le côté opposé à la première portion de poussée (102).

43. Ressort selon la revendication 42, dans lequel ladite seconde portion de poussée (104) est réalisée dans la longueur du ressort définissant la boucle (112).

44. Ressort selon la revendication 42, dans lequel la portion de base (106) comprend une longueur plane et une boucle (112) qui s'étend depuis le même côté de la longueur plane de la portion de base (106) par rapport à la première portion de poussée (102), ladite seconde portion de poussée (104) étant prévue dans la longueur du ressort définissant la boucle (112).

45. Ressort selon l'une des revendications 40 à 44, dans lequel la seconde portion de poussée (104) comprend au moins une languette (114) s'étendant dans une direction transversale à la ligne incurvée globale (116) définissant la ligne du ressort.

46. Ressort selon la revendication 45, dans lequel deux languettes (114) sont prévues, qui sont appropriées pour être cintrées sur approximativement 180° par rapport à la portion de base (106) et qui s'étendent depuis des côtés opposés de la ligne globale (116).

47. Ressort selon la revendication 46, dans lequel les deux languettes (114) sont décalées le long de la ligne globale (116).

48. Ressort selon l'une des revendications 32 à 47, comprenant des portions (118, 124) accrochées sur le corps (12) de l'étrier et appropriées pour agir ensemble avec des éléments de fixation (54, 56) du corps d'étrier (12).

49. Ressort selon la revendication 48 prise en dépendance de la revendication 36, dans laquelle une première portion d'accrochage (118) comprend une longueur de la portion (110) qui relie la première portion de poussée (102) appropriée pour être introduite entre une dent extérieure (54) et une paroi latérale (36) du corps (12) pour immobiliser le ressort (100) dans une direction parallèle à l'axe de rotation du disque dans la configuration assemblée du frein.

50. Ressort selon la revendication 49, dans lequel la portion de liaison (110) possède des dimensions transversalement à la ligne globale (116) du ressort qui sont similaires à celles de la portion de base (106) et de la paroi inclinée (108), et est taillée de manière à définir une ouverture (120) appropriée pour recevoir la dent extérieure (54).

51. Ressort selon la revendication 50, dans lequel ladite ouverture (120) présente une extension inférieure à la largeur de la portion de liaison (110) dans une direction transversale à la ligne globale (116), et est ouverte sur un côté de la portion de liaison (110).

52. Ressort selon la revendication 50 ou 51, dans lequel la portion de liaison (110) comprend des longueurs cintrées (122) qui bordent au moins partiellement l'ouverture (120), lesdites longueurs cintrées étant appropriées pour être placées sur les côtés de la dent extérieure (54).

53. Ressort selon la revendication 52, dans lequel la portion de liaison (110) présente une première ligne de coupe (110a) qui s'étend parallèlement à une ligne globale (116) du ressort (100) et une autre ligne de coupe (110b) perpendiculaire à la première ligne de coupe (110a) et à la ligne globale (116), et s'ouvre au niveau du bord de la portion de liaison (110), la première ligne de coupe (110a) et l'autre ligne de coupe (110b) définissant une découpe en forme de "T" dans la portion de liaison (110) qui borde les longueurs cintrées (122).

54. Ressort selon l'une des revendications 48 à 53, dans lequel une seconde portion d'accrochage (124) comprend une portion d'extrémité intérieure du ressort (100) qui s'étend depuis une portion de base (106) et qui est appropriée pour être introduite entre une dent intérieure (56) et une paroi latérale (36) du corps (12) de l'étrier immobilisant l'extrémité intérieure du ressort (100) dans une direction parallèle à l'axe de rotation du disque dans la configuration assemblée du frein.

55. Ressort selon la revendication 54, dans lequel la seconde portion d'accrochage (124) s'étend avec continuité depuis la portion de base (106), en étant cintrée sensiblement sous une forme en "L" afin d'enfermer une extrémité d'une paroi de retenue (46) du siège (44) abritant un patin (14).

56. Ressort selon la revendication 54 ou 55, dans lequel la seconde portion d'accrochage (124) présente des dimensions transversalement à la ligne globale (116) du ressort qui sont inférieures à celles de la portion de base (106), et est taillée de manière à définir une ouverture (126) appropriée pour abriter une dent intérieure (56) du corps (12) pour immobiliser des mouvements par l'extrémité intérieure du ressort (100) dans une direction tangentielle (t).

57. Ressort selon la revendication 56, dans lequel la seconde portion d'accrochage (124) est taillée sous une forme en "L", un premier bras (128a) du "L" étant conçu pour être situé entre la dent intérieure (56) et une paroi latérale (36) du corps d'étrier (12), et un second bras (128b) du "L" étant approprié pour enfermer un côté de la dent intérieure (56).

58. Ressort selon la revendication 56, dans lequel la seconde portion d'accrochage (124) est taillée sous une forme en "L", un premier bras (128a) du "L" étant parallèle à la ligne globale (116) et un second bras (128b) du "L" étant transversal à la ligne globale (116).

59. Ressort selon la revendication 57 ou 58, dans lequel la seconde portion d'accrochage (124) possède des longueurs cintrées (130) qui bordent au moins partiellement l'ouverture (126) correspondant à la dent intérieure (56), lesdites longueurs cintrées (128) étant appropriées pour être placées sur les côtés de la dent intérieure (56).

60. Ressort selon l'une des revendications 48 à 59, dans lequel le ressort (100) possède une largeur, c'est-à-dire une dimension dans une direction transversale à la ligne globale (116), qui est sensiblement constante le long de la ligne globale, à l'exception des deux portions d'accrochage dont les dimensions sont appropriées pour introduire la longueur du ressort entre la paroi latérale (36) du corps (12) et les éléments de fixation correspondants.

61. Ressort selon l'une des revendications 34 à 60, dans lequel les extrémités libres du ressort sont situées sur des côtés opposés d'une longueur plane de la portion de base (106).

62. Étrier pour un frein à disque comprenant au moins un patin (14) selon l'une des revendications 1 à 10, un corps (12) selon l'une des revendications 11 à 31, et au moins un ressort selon l'une des revendications 32 à 61.
